# EUROPEAN PATENT APPLICATION

(11) **EP 4 757 384 A1**
(43) Date of publication of application: **10.06.2026**
(21) Application number: 24848147.5
(22) Date of filing: 26.07.2024
(51) Int. Cl.: H04W 24/02

(54) **INFORMATION REPORTING METHOD AND APPARATUS, TERMINAL, AND NETWORK SIDE DEVICE**

(30) Priority: 01.08.2023 CN 202310959580
(71) Applicant: Vivo Mobile Communication Co., Ltd., Dongguan, Guangdong 523863 (CN)
(72) Inventor: JIANG, Lu, Dongguan, Guangdong 523863 (CN); CHEN, Xiaohang, Dongguan, Guangdong 523863 (CN); LI, Gen, Dongguan, Guangdong 523863 (CN)
(74) Representative: Shieldmark
(86) International application number: PCT/CN2024/107676
(87) International publication number: WO 2025/026190

(57) **Abstract**

This application discloses an information reporting method and apparatus, a terminal, and a network-side device, belonging to the field of telecommunications. The method in an embodiment of this application includes: receiving, by a terminal, target information sent by a network-side device, where the target information is used to indicate whether to activate a target channel state information CSI reporting sub-configuration associated with a target CSI reporting configuration; and in a case that the target information indicates to activate the target CSI reporting sub-configuration associated with the target CSI reporting configuration, sending, by the terminal, CSI to the network-side device based on the target CSI reporting sub-configuration.

## Description

### CROSS-REFERENCE TO RELATED APPLICATIONS

This application claims priority to Chinese Patent Application No. 202310959580.6, filed in China on August 1, 2023, which is incorporated herein by reference in its entirety.

### TECHNICAL FIELD

This application pertains to the field of telecommunications, and specifically relates to an information reporting method and apparatus, a terminal, and a network-side device.

### BACKGROUND

In the related art, to achieve network energy saving, a network-side device may dynamically turn off some transceiver units (Transceiver Unit, TxRU) for the purpose of network energy saving. A terminal sends, to the network-side device, channel state information (Channel State Information, CSI) determined based on an activated CSI reporting configuration, to assist the network-side device in dynamically turning off some TxRUs. However, the terminal can determine and report the CSI only based on the activated CSI reporting configuration, resulting in poor flexibility of CSI reporting by the terminal.

### SUMMARY

Embodiments of this application provide an information reporting method and apparatus, a terminal, and a network-side device, to solve the problem of poor flexibility of CSI reporting by a terminal.

According to a first aspect, an information reporting method is provided, including:
receiving, by a terminal, target information sent by a network-side device, where the target information is used to indicate whether to activate a target channel state information CSI reporting sub-configuration associated with a target CSI reporting configuration; and
in a case that the target information indicates to activate the target CSI reporting sub-configuration associated with the target CSI reporting configuration, sending, by the terminal, CSI to the network-side device based on the target CSI reporting sub-configuration.

According to a second aspect, an information reporting method is provided, including:
sending, by a network-side device, target information to a terminal, where the target information is used to indicate whether to activate a target CSI reporting sub-configuration associated with a target CSI reporting configuration; and
in a case that the target information indicates to activate the target CSI reporting sub-configuration associated with the target CSI reporting configuration, receiving, by the network-side device, CSI sent by the terminal based on the target CSI reporting sub-configuration.

According to a third aspect, an information reporting apparatus is provided, where a terminal includes the information reporting apparatus, and the apparatus includes:
a receiving module, configured to receive target information sent by a network-side device, where the target information is used to indicate whether to activate a target channel state information CSI reporting sub-configuration associated with a target CSI reporting configuration; and
a sending module, configured to, in a case that the target information indicates to activate the target CSI reporting sub-configuration associated with the target CSI reporting configuration, send CSI to the network-side device based on the target CSI reporting sub-configuration.

According to a fourth aspect, an information reporting apparatus is provided, where a network-side device includes the information reporting apparatus, and the apparatus includes:
a sending module, configured to send target information to a terminal, where the target information is used to indicate whether to activate a target CSI reporting sub-configuration associated with a target CSI reporting configuration; and
a receiving module, configured to, in a case that the target information indicates to activate the target CSI reporting sub-configuration associated with the target CSI reporting configuration, receive CSI sent by the terminal based on the target CSI reporting sub-configuration.

According to a fifth aspect, a terminal is provided, where the terminal includes a processor and a memory, the memory stores a program or instructions capable of running on the processor, and when the program or the instructions are executed by the processor, the steps of the method according to the first aspect are implemented.

According to a sixth aspect, a network-side device is provided, where the network-side device includes a processor and a memory, the memory stores a program or instructions capable of running on the processor, and when the program or the instructions are executed by the processor, the steps of the method according to the second aspect are implemented.

According to a seventh aspect, a terminal is provided, including a processor and a communication interface, where the communication interface is configured to:
receive target information sent by a network-side device, where the target information is used to indicate whether to activate a target channel state information CSI reporting sub-configuration associated with a target CSI reporting configuration; and
in a case that the target information indicates to activate the target CSI reporting sub-configuration associated with the target CSI reporting configuration, send CSI to the network-side device based on the target CSI reporting sub-configuration.

According to an eighth aspect, a network-side device is provided, including a processor and a communication interface, where the communication interface is configured to:
send target information to a terminal, where the target information is used to indicate whether to activate a target CSI reporting sub-configuration associated with a target CSI reporting configuration; and
in a case that the target information indicates to activate the target CSI reporting sub-configuration associated with the target CSI reporting configuration, receive CSI sent by the terminal based on the target CSI reporting sub-configuration.

According to a ninth aspect, an information reporting system is provided, including: a terminal and a network-side device, where the terminal may be configured to execute the steps of the method according to the first aspect, and the network-side device may be configured to execute the steps of the method according to the second aspect.

According to a tenth aspect, a readable storage medium is provided, where the readable storage medium stores a program or instructions, and when the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or implement the method according to the second aspect.

According to a twelfth aspect, a computer program/program product is provided, where the computer program/program product is stored in a storage medium, and the computer program/program product is executed by at least one processor to implement the steps of the method according to the first aspect, or implement the steps of the method according to the second aspect.

In the embodiments of this application, a terminal receives target information sent by a network-side device, where the target information is used to indicate whether to activate a target channel state information CSI reporting sub-configuration associated with a target CSI reporting configuration; and in a case that the target information indicates to activate the target CSI reporting sub-configuration associated with the target CSI reporting configuration, the terminal sends CSI to the network-side device based on the target CSI reporting sub-configuration. In this way, the terminal can be enabled to determine, based on an activated CSI reporting sub-configuration, which sub-configuration requires CSI reporting. This can improve flexibility of the network side in instructing the terminal to report CSI.

### BRIEF DESCRIPTION OF DRAWINGS

FIG. 1 is a block diagram of a wireless communication system to which embodiments of this application are applicable;
FIG. 2 is a schematic diagram of turning off some TxRUs in the related art;
FIG. 3 is a schematic diagram of spatial domain shutdown in the related art;
FIG. 4 is a first schematic structural diagram of a MAC CE in the related art;
FIG. 5 is a second schematic structural diagram of a MAC CE in the related art;
FIG. 6 is a first flowchart of an information reporting method according to an embodiment of this application;
FIG. 7a is a first schematic structural diagram of a MAC CE according to an embodiment of this application;
FIG. 7b is a second schematic structural diagram of a MAC CE according to an embodiment of this application;
FIG. 7c is a third schematic structural diagram of a MAC CE according to an embodiment of this application;
FIG. 8 is a schematic diagram of a periodic trigger state list according to an embodiment of this application;
FIG. 9 is a fourth schematic structural diagram of a MAC CE according to an embodiment of this application;
FIG. 10 is a fifth schematic structural diagram of a MAC CE according to an embodiment of this application;
FIG. 11 is a sixth schematic structural diagram of a MAC CE according to an embodiment of this application;
FIG. 12 is a seventh schematic structural diagram of a MAC CE according to an embodiment of this application;
FIG. 13 is a second flowchart of an information reporting method according to an embodiment of this application;
FIG. 14 is a first schematic structural diagram of an information reporting apparatus according to an embodiment of this application;
FIG. 15 is a second schematic structural diagram of an information reporting apparatus according to an embodiment of this application;
FIG. 16 is a schematic structural diagram of a communication device according to an embodiment of this application;
FIG. 17 is a schematic structural diagram of a terminal according to an embodiment of this application;
FIG. 18 is a first schematic structural diagram of a network-side device according to an embodiment of this application; and
FIG. 19 is a second schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the term "or" in this application indicates at least one of the connected objects, for example, "A or B" encompasses three scenarios: scenario one, including A but not B; scenario two, including B but not A; and scenario three, including both A and B. The character "/" generally represents an "or" relationship between the associated objects.

The term "indication" in this application may be either a direct indication (or explicit indication) or an indirect indication (or implicit indication). The direct indication can be understood as the sender explicitly informing the receiver of specific information, operations to be performed, or request results in the sent indication; and the indirect indication can be understood as the receiver determining the corresponding information according to the indication sent by the sender, or making a judgment and determining the operations to be performed or request results according to the judgment result.

It should be noted that technologies described in the embodiments of this application are not limited to a long term evolution (Long Term Evolution, LTE)/LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6^{th} generation (6^{th} Generation, 6G) communication system.

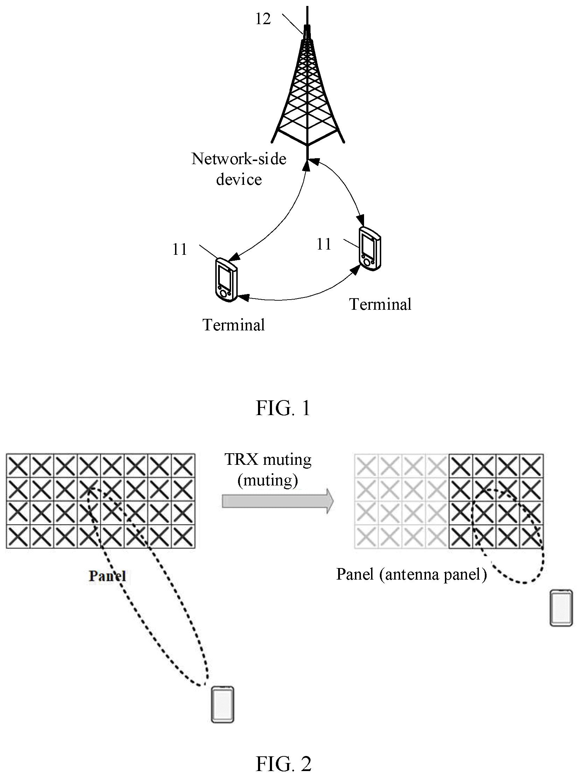

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle user equipment (Vehicle User Equipment, VUE), a ship-borne equipment, a pedestrian user equipment (Pedestrian User Equipment, PUE), a smart home (home devices with a wireless communication function, for example, a refrigerator, a television, a washing machine, or a furniture), a game console, a personal computer (Personal Computer, PC), a teller machine, or self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment may also be referred to as a vehicle terminal, a vehicle controller, a vehicle module, a vehicle component, a vehicle chip, or a vehicle unit. In addition to the above terminal devices, the terminal 11 may alternatively be a chip within the terminal, such as a modem (Modem) chip or a system on chip (System on Chip, SoC) It should be noted that the embodiments of this application do not impose any limitation on a specific type of the terminal 11. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home B node (home Node B, HNB), a home evolved B node (home evolved Node B), a transmission reception point (Transmission Reception Point, TRP), or other appropriate terms in the field, provided that the same technical effect is achieved. The base station is not limited to specific technical terms. It should be noted that in the embodiments of this application, the base station in the NR system is used as an example for introduction, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of this application are described with only the core network device in the NR system as an example, but the core network device is not limited to any specific type.

For ease of understanding, the following describes some content involved in the embodiments of this application.

### 1. Network energy saving

Conventional base station energy saving mainly adopts methods such as on-site power-off, time-controlled switch, and cell barring. However, these methods are relatively simplistic and cannot balance user experience. In the era of the 5th generation mobile communication technology (5th Generation Mobile Communication Technology, 5G), 5G base stations adopt 64T64R massive antenna arrays and support larger bandwidths, leading to higher energy consumption compared to 4th generation mobile communication technology (4th Generation Mobile Communication Technology, 4G) base stations. Secondly, 5G operates in higher bands with a smaller single-station coverage range. To achieve the same coverage as 4G networks, the deployment scale of 5G base stations will be 2 to 3 times that of 4G base stations. With higher device power consumption and a greater number of sites, overall power consumption will inevitably increase. Excessive 5G power consumption has become a key pain point in current network operations, making research on 5G base station energy-saving technologies imperative.

Based on implementation principles, base station energy saving may be classified into symbol blanking, carrier deactivation, channel shutdown, and deep sleep technologies. Technical background of spatial domain energy saving: massive multiple-input multiple-output (massive Multiple-Input Multiple-Output, mMIMO) consumes significant energy due to the large number of antennas and corresponding radio frequency components. When the number of user equipments (User Equipment, UE) in a cell is small, the capacity/coverage gains provided by mMIMO are redundant. In this scenario, a network side may dynamically turn off some TxRUs to achieve network energy saving. As shown in FIG. 2, TxRUs corresponding to some antenna elements may be deactivated to serve a small number of users. After deactivating some TxRUs, a beam coverage range will be slightly reduced and a beam width will increase accordingly.

In the power domain, dynamic adjustment of power control offset (powerControlOffset) values for CSI reference signal (CSI Reference Signal, CSI-RS) resources (resource) is considered.

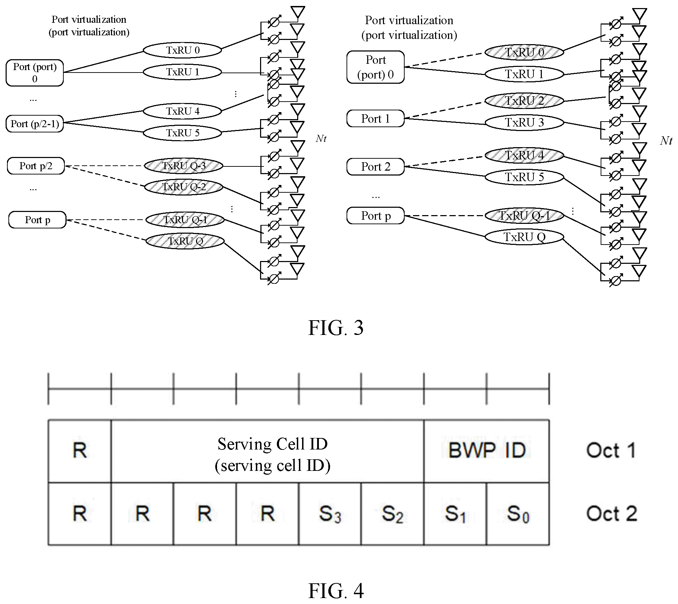

2. As shown in FIG. 3, two modes of spatial domain shutdown:
Type I (Type I) shutdown (shutdown) means that all TxRUs associated with a port are turned off, resulting in a change in the number of ports before and after shutdown; and
Type II (Type II) shutdown means that some TxRUs associated with a port are turned off, so the number of ports remains unchanged before and after shutdown.

### 3. CSI reporting (report) framework (framework)

A CSI reporting configuration (CSI-ReportConfig) mainly includes the following content:
CSI resource configuration (setting): At least one CSI resource for channel measurement shall be configured;
reporting configuration type (reportConfigType): Indicates the time-domain behavior of CSI reporting;
frequency-domain reporting configuration (reportFreqConfiguratio): Indicates the frequency-domain behavior of CSI reporting, that is, wideband reporting or subband reporting;
reporting quantity (reportQuantity): Indicates the parameters included in the report, including none, cri-RI-PMI-CQI, cri-RI-i1, cri-RI-i1-CQI, cri-RI-CQI, cri-RSRP, ssb-Index-RSRP, and cri-RI-LI-PMI-CQI;
codebook configuration (codebookConfig): Indicates the type of codebook to be reported, including Type I and Type II; and
time restriction for channel measurements (timeRestrictionForChannelMeasurements): Indicates whether the time domain of CSI measurement is restricted.

### 4. Concept of sub-configuration CSI reporting or CSI reporting sub-configuration (sub-config CSI report)

One CSI reporting configuration includes a plurality of sub-configurations, where each sub-configuration corresponds to one spatial domain adaptation pattern.

### 5. Medium access control (Medium Access Control, MAC) control element (Control Element, CE) for activating semi-persistent CSI reporting

The current MAC CE for activating semi-persistent CSI reporting is shown in FIG. 4.

The SP CSI reporting on a physical uplink control channel (Physical Uplink Control Channel, PUCCH) activation/deactivation MAC CE is identified by a MAC subheader with a logical channel identifier (Logical Channel Identity, LCID). It has a fixed size of 16 bits and includes the following fields (The SP CSI reporting on PUCCH Activation/Deactivation MAC CE is identified by a MAC subheader with LCID as specified. It has a fixed size of 16 bits with following fields):
Serving cell Identifier (Identifier, ID): This field indicates the identifier of the serving cell to which the MAC CE is applied. The length of the field is 5 bits (Serving Cell ID: This field indicates the identity of the Serving Cell for which the MAC CE applies. The length of the field is 5 bits).
Bandwidth part (Bandwidth Part, BWP) ID: This field indicates a UL BWP to which the MAC CE is applied as the codepoint of the DCI bandwidth part indicator field specified in TS 38.212[9]. The length of the BWP ID field is 2 bits (BWP ID: This field indicates a UL BWP for which the MAC CE applies as the codepoint of the DCI bandwidth part indicator field as specified in TS 38.212 [9]. The length of the BWP ID field is 2 bits).

The SP CSI reporting on PUCCH Activation/Deactivation MAC CE is identified by a MAC subheader with LCID as specified in Table 6.2.1-1. It has a fixed size of 16 bits and includes the following fields (The SP CSI reporting on PUCCH Activation/Deactivation MAC CE is identified by a MAC subheader with LCID as specified in Table 6.2.1-1. It has a fixed size of 16 bits with following fields):
Serving Cell ID: This field indicates the identifier of the serving cell to which the MAC CE is applied. The length of the field is 5 bits (Serving Cell ID: This field indicates the identity of the Serving Cell for which the MAC CE applies. The length of the field is 5 bits).
BWP ID: This field indicates a UL BWP to which the MAC CE is applied as the codepoint of the DCI bandwidth part indicator field specified in TS 38.212[9]. The length of the BWP ID field is 2 bits (BWP ID: This field indicates a UL BWP for which the MAC CE applies as the codepoint of the DCI bandwidth part indicator field as specified in TS 38.212 [9]. The length of the BWP ID field is 2 bits).
Si: This field indicates the activation/deactivation state of the semi-persistent CSI report configuration within ReportConfigToAddModList as specified in TS 38.331 [5]. S0 refers to the report configuration that includes PUCCH resources for SP CSI reporting in the indicated BWP and has the lowest CSI-ReportConfigId within the list with type set to Semi-PersistentOnPUCCH, S1 refers to the report configuration that includes PUCCH resources for SP CSI reporting in the indicated BWP and has the second lowest CSI-ReportConfigId and so on. If the number of report configurations within the list with the type set to Semi-PersistentOnPUCCH in the indicated BWP is less than i + 1, the MAC entity shall ignore the Si field. The Si field is set to 1 to indicate that the corresponding Semi-Persistent CSI report configuration shall be activated. The Si field is set to 0 to indicate that the corresponding semi-persistent CSI report configuration i shall be deactivated (Si: This field indicates the activation/deactivation status of the semi-persistent CSI report configuration within ReportConfigToAddModList as specified in TS 38.331 [5]. S0 refers to the report configuration which includes PUCCH resources for SP CSI reporting in the indicated BWP and has the lowest CSI-ReportConfigId within the list with type set to semiPersistentOnPUCCH, S1 to the report configuration which includes PUCCH resources for SP CSI reporting in the indicated BWP and has the second lowest CSI-ReportConfigId and so on. If the number of report configurations within the list with type set to semiPersistentOnPUCCH in the indicated BWP is less than i + 1, MAC entity shall ignore the Si field. The Si field is set to 1 to indicate that the corresponding Semi-Persistent CSI report configuration shall be activated. The Si field is set to 0 to indicate that the corresponding Semi-Persistent CSI report configuration i shall be deactivated).
R: Reserved bit, set to 0 (R: Reserved bit, set to 0).

ServingCellId indicates the identifier of the serving cell to which this MAC CE is applied; and has a length of 5 bits.

Si represents a state of a semi-persistent CSI reporting configuration in ReportConfigToAddModList, where s0 refers to the CSI reporting configuration with the smallest CSI-ReportConfigId among all semi-persistent CSI reporting configurations, and so on; a value of Si being 1 indicates that the semi-persistent CSI reporting configuration is activated, and a value of Si being 0 indicates that the semi-persistent CSI reporting configuration is deactivated.

### 6. MAC CE for activating semi-persistent CSI-RS activation

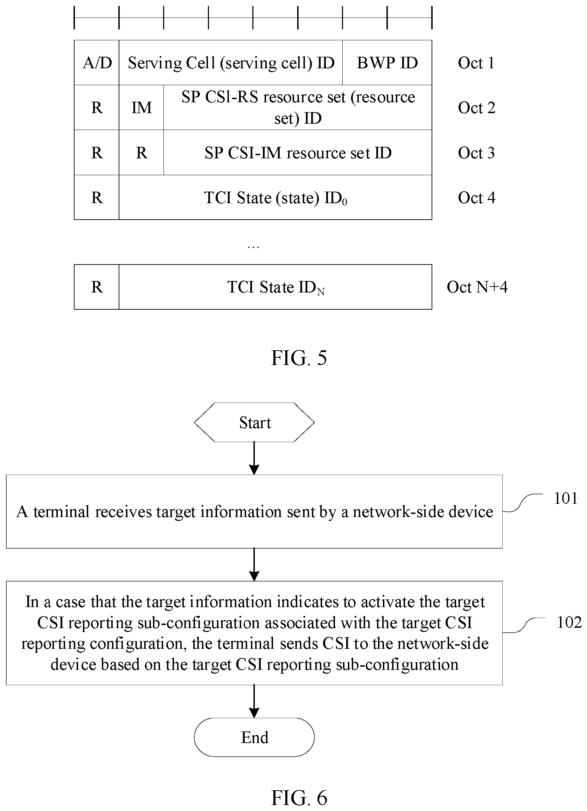

As shown in FIG. 5, aperiodic CSI reporting and aperiodic CSI-RS resources are triggered by two MAC CEs respectively.

A/D indicates activation or deactivation, a value of 1 indicates activation, and a value of 0 indicates deactivation. M indicates the presence of SP-CSI-IM, a value of 1 indicates that SP-CSI-IM is present, and a value of 0 indicates that it is not present. TCI state ID₀ indicates a TCI state ID of the first CSI resource in the CSI resource set.

### 7. TriggerState for activating aperiodic CSI reporting

The triggerState may be characterized by CSI-AperiodicTriggerStateList, as follows:

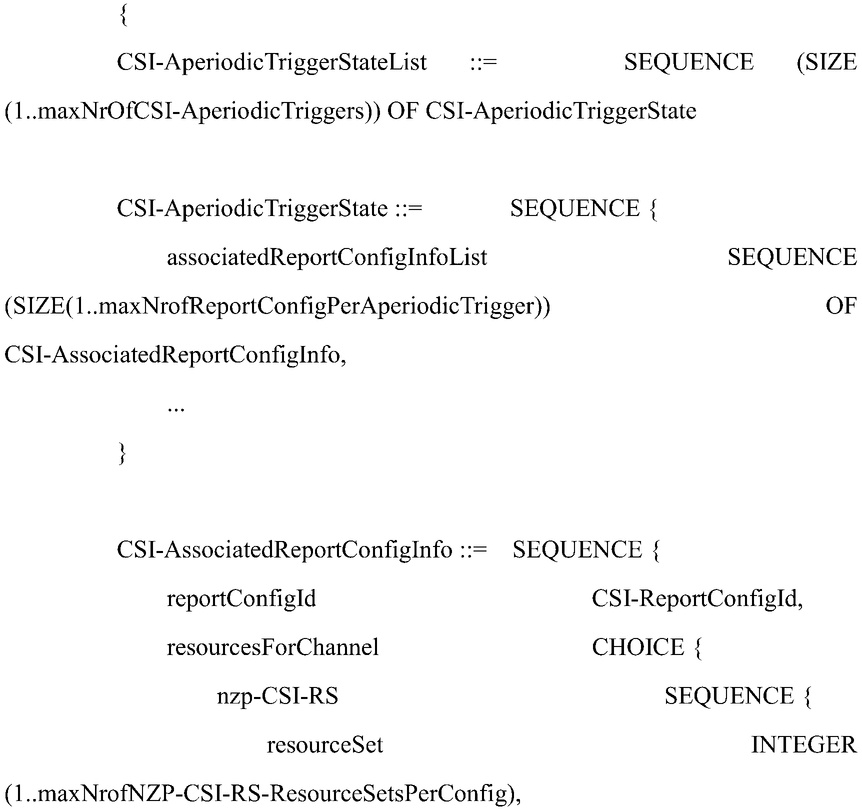

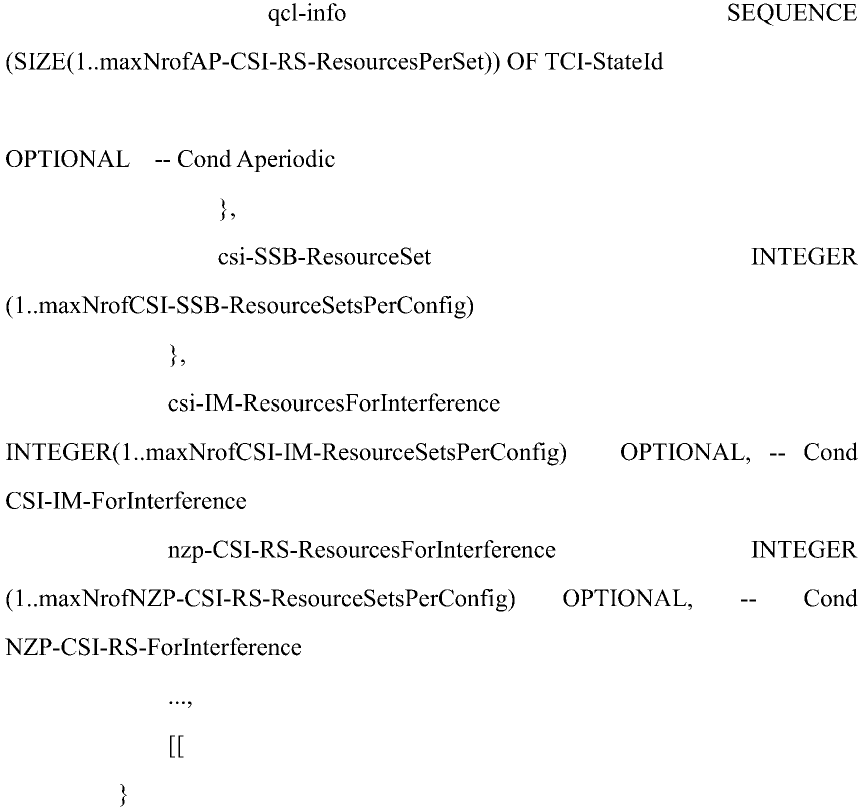

Each CSI-AperiodicTriggerStateList consists of up to 128 CSI-AperiodicTriggerStates (maxNrOfCSI-AperiodicTrigger is 128), where each CSI-AperiodicTriggerState includes up to 16 CSI-AssociatedReportConfigInfos (with maxNrofReportConfigPerAperiodicTrigger set to 16). Each CSI-AssociatedReportConfigInfo shall contain one reportConfigId, which corresponds to one CSI-ReportConfigId and is associated with a corresponding CSI-ReportConfig via the CSI-ReportConfigId. Each CSI-AssociatedReportConfigInfo shall also contain one resourcesForChannel, and each resourcesForChannel includes one nzp-CSI-RS or one csi-SSB-ResourceSet. The resourceSet within nzp-CSI-RS indicates an NZP CSI-RS resource set (NZP-CSI-RS-ResourceSet) for channel measurement, and the csi-SSB-ResourceSet indicates an SSB resource set (CSI-SSB-ResourceSet) for channel measurement. In addition to resourcesForChannel, each CSI-AssociatedReportConfigInfo may also include one csi-IM-ResourcesForInterference and/or one nzp-CSI-RS-ResourcesForInterference (both are Optional). The former indicates the CSI-IM resource set (CSI-IM-ResourceSet) for interference measurement, and the latter indicates the NZP CSI-RS resource set (NZP-CSI-RS-ResourceSet) for interference measurement.

### 8. Trigger state (triggerState) for activating semi-persistent CSI reporting (similar to aperiodic):

The CSI-SemiPersistentOnPUSCH-TriggerStateList IE is used to configure one or more trigger states for PUSCH-based semi-persistent CSI reporting for a UE, namely, CSI-SemiPersistentOnPUSCH-TriggerState. Each CSI-SemiPersistentOnPUSCH-TriggerState contains only one associated CSI-ReportConfig. Each CSI-SemiPersistentOnPUSCH-TriggerStateList consists of up to 64 CSI-SemiPersistentOnPUSCH- TriggerStates (maxNrOfSemiPersistentPUSCH-Triggers is 64), and each CSI-SemiPersistentOnPUSCH-TriggerState contains only one associatedReportConfigInfo that corresponds to one CSI-ReportConfigId and is associated with a corresponding CSI-ReportConfig through the CSI-ReportConfigId.

### 9. CSI-RS quantity and nrofports counting constraints

In any slot, a UE is not expected to have more active CSI-RS ports or active CSI-RS resources in an active BWP than those reported as a capability (In any slot, the UE is not expected to have more active CSI-RS ports or active CSI-RS resources in active BWPs than reported as capability).

At any given time, the number of CSI-RS resources associated with all CSI reports at that time and the number of corresponding ports shall not exceed UE capabilities: maxNumberSimultaneousNZP-CSI-RS-PerCC and totalNumberPortsSimultaneousNZP-CSI-RS-PerCC.

If one or more CSI report settings refer to the CSI-RS resource N times, the resource and its corresponding ports shall also be counted N times. [NCJT]: If a CSI-RS resource set for channel measurement is configured with two resource groups and N resource pairs, and if a CSI-RS resource is referred X times by one of M CSI-RS resources (where M is defined in clause 5.2.1.4.2) and/or one or two resource pairs, the CSI-RS resource and CSI-RS ports within the CSI-RS resource are counted X times (If a CSI-RS resource is referred N times by one or more CSI Reporting Settings, the CSI-RS resource and the CSI-RS ports within the CSI-RS resource are counted N times. [For a CSI-RS Resource Set for channel measurement configured with two Resource Groups and N Resource Pairs, if a CSI-RS resource is referred X times by one of the M CSI-RS resources, where M is defined in clause 5.2.1.4.2, and/or one or two Resource Pairs, the CSI-RS resource and the CSI-RS ports within the CSI-RS resource are counted X times.]).

An information reporting method and apparatus, a terminal, and a network-side device provided in the embodiments of this application are described in detail below with reference to the accompanying drawings through specific embodiments and application scenarios thereof.

Referring to FIG. 6, FIG. 6 is a flowchart of an information reporting method according to an embodiment of this application. As shown in FIG. 6, the information reporting method includes the following steps:
Step 101: A terminal receives target information sent by a network-side device, where the target information is used to indicate whether to activate a target channel state information CSI reporting sub-configuration associated with a target CSI reporting configuration.
Step 102: In a case that the target information indicates to activate the target CSI reporting sub-configuration associated with the target CSI reporting configuration, the terminal sends CSI to the network-side device based on the target CSI reporting sub-configuration.

The target CSI reporting configuration may be one or more CSI reporting configurations.

The target CSI reporting sub-configuration may be one or more CSI reporting sub-configurations.

The target information may be a media access control MAC control element CE or downlink control information (Downlink Control Information, DCI).

The target CSI reporting configuration (CSI report config) may be associated with one or more CSI reporting sub-configurations. The CSI reporting sub-configuration associated with the CSI reporting configuration may also be described as a CSI reporting sub-configuration in the CSI reporting configuration.

In addition, the CSI reporting sub-configuration (sub-config CSI report) may also be described as sub-configuration CSI reporting or simply as a sub-configuration (sub-config).

In the related art, a base station is unable to activate a plurality of CSI reporting sub-configurations via a single signaling transmission of Layer 1 or Layer 2, where each CSI reporting sub-configuration corresponds to one spatial domain adaptation pattern. Signaling in the related art can only activate a single CSI report at a time and lack the capability to activate sub-configuration CSI reporting.

The target information in this embodiment may be a MAC CE or DCI, which can support Layer 1 (Layer 1, L1)/Layer 2 (Layer 2, L2) signaling (signaling) to trigger sub-configuration CSI reporting, and can also support triggering of a plurality of sub-configuration-based CSI reports affiliated with the same CSI reporting configuration by means of L1/L2 signaling. The embodiments of this application enable the triggering of a plurality of sub-configuration CSI reportings that belong to the same CSI reporting configuration by means of L1/L2 signaling.

In the embodiments of this application, a terminal receives target information sent by a network-side device, where the target information is used to indicate whether to activate a target channel state information CSI reporting sub-configuration associated with a target CSI reporting configuration; and in a case that the target information indicates to activate the target CSI reporting sub-configuration associated with the target CSI reporting configuration, the terminal sends CSI to the network-side device based on the target CSI reporting sub-configuration. In this way, the terminal can be enabled to determine which sub-configuration-based CSI reports need to be sent according to activated CSI reporting sub-configuration, thereby improving flexibility of the network side in instructing the terminal to report CSI.

Optionally, in a case that the target information is a MAC CE, the target information indicates at least one of the following: whether to activate a semi-persistent target CSI reporting configuration; and whether to activate a semi-persistent target CSI reporting sub-configuration;
or
in a case that the target information is DCI, the target information indicates at least one of the following: whether to activate a semi-persistent target CSI reporting configuration; and whether to activate a semi-persistent target CSI reporting sub-configuration;
   or
in a case that the target information is DCI, the target information indicates at least one of the following: whether to activate an aperiodic target CSI reporting configuration; and whether to activate an aperiodic target CSI reporting sub-configuration.

In this embodiment, a UE reports one or more sub-configuration CSI reports affiliated with the same CSI reporting configuration. A MAC CE activates one or more semi-persistent sub-configuration CSI reports affiliated with the same CSI reporting configuration.

It should be noted that a MAC CE that triggers CSI reporting (report) in the related art is unable to trigger one or more semi-persistent sub-configuration CSI reports in one or more semi-persistent CSI reporting configurations. However, the MAC CE in this embodiment can implement a function of triggering sub-configuration CSI reporting.

In this embodiment, a network-side device can be supported in activating a semi-persistent target CSI reporting configuration of a terminal or activating a semi-persistent target CSI reporting sub-configuration via a MAC CE; or a network-side device can be supported in activating a semi-persistent target CSI reporting configuration of a terminal or activating a semi-persistent target CSI reporting sub-configuration via DCI; or a network-side device can be supported in activating an aperiodic target CSI reporting configuration of a terminal or activating an aperiodic target CSI reporting sub-configuration via DCI. This embodiment supports a function of indicating, via a single signaling transmission of Layer 1/Layer 2, whether a sub-configuration CSI report is sent.

Optionally, the target information is a first MAC CE; and
the first MAC CE includes status indication information of a plurality of CSI reporting configurations and status indication information of a plurality of CSI reporting sub-configurations associated with each of the plurality of CSI reporting configurations, and the plurality of CSI reporting configurations include the target CSI reporting configuration.

In an implementation, the status indication information indicates an activation state, for example, activation or deactivation.

In an implementation, the target information is a first MAC CE, the first MAC CE includes a first part, a second part, and a third part, and the first part, the second part, and the third part are arranged in a top-to-bottom order;
the first part includes at least serving cell indication information and bandwidth part BWP indication information;
the second part includes status indication information of a plurality of CSI reporting configurations, and in the second part, the status indication information of the plurality of CSI reporting configurations is arranged from right to left in ascending order of identifiers of the plurality of CSI reporting configurations; and
the third part includes status indication information of a plurality of CSI reporting sub-configurations associated with each of a plurality of CSI reporting configurations, and in the third part, in ascending order of identifiers of the plurality of CSI reporting configurations, the CSI reporting sub-configurations associated with the plurality of CSI reporting configurations are arranged from right to left, where the plurality of CSI reporting sub-configurations associated with each CSI reporting configuration are arranged from right to left in ascending order of identifiers of the CSI reporting sub-configurations.

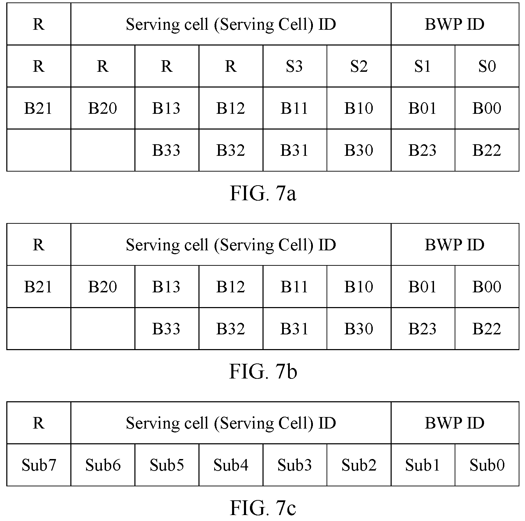

As a specific embodiment, the first MAC CE is a new MAC CE, the first MAC CE has both a function of activating a CSI reporting configuration and a function of activating a sub-configuration CSI report, and the legacy (legacy) MAC CE may no longer be used. A format of the first MAC CE is shown in FIG. 7a, where R represents a reserved (reserved) bit, Si represents a state of a semi-persistent CSI reporting configuration in ReportConfigToAddModList, s0 refers to a CSI reporting configuration with the smallest CSI reporting configuration identifier (CSI-ReportConfigId) among semi-persistent CSI reporting configurations with a reporting type configured as Semi-PersistentOnPUCCH in ReportConfigToAddModList, s1 refers to a CSI reporting configuration with the second smallest CSI-ReportConfigId, and so on; a bit value of Si being 1 indicates that the semi-persistent CSI reporting configuration is activated, and a bit value of Si being 0 indicates that the semi-persistent CSI reporting configuration is deactivated.

In addition, as shown in FIG. 7a, B represents a state of L sub-configurations contained in a semi-persistent CSI-ReportConfig that is configured by radio resource control (Radio Resource Control, RRC) and included in ReportConfigToAddModList; Bij refers to a sub-configuration belonging to an Si reporting configuration; the number of bits occupied by Bij is related to the number of sub-configurations configured/activated by Si; for example, B00 refers to an activation state of a sub-configuration with the smallest CSI reporting sub-configuration identifier (sub-configId) in a CSI-ReportConfig with the smallest CSI-ReportConfigId among all semi-persistent CSI reporting configurations, and the activation state may include activation or deactivation; B01 refers to an activation state (activated/deactivated) of a sub-configuration with the second smallest sub-configId in a CSI-ReportConfig with the smallest CSI-ReportConfigId among all semi-persistent CSI reporting configurations; and B10 refers to an activation state (activated/deactivated) of a sub-configuration with the smallest sub-configId in a CSI-ReportConfig with the second smallest CSI-ReportConfigId among all semi-persistent CSI reporting configurations.

In FIG. 7a, S0 includes two sub-configurations {B00 and B01}, S1 includes four sub-configurations {B10, B11, B12, B13}, S2 includes four sub-configurations {B20, B21, B22, B23}, and S3 includes four sub-configurations {B30, B31, B32, B33}.

In this implementation, the target information is a first MAC CE, and the first MAC CE includes status indication information of a plurality of CSI reporting configurations and status indication information of a plurality of CSI reporting sub-configurations associated with each of the plurality of CSI reporting configurations, so that a plurality of CSI reporting configurations can be activated simultaneously via the first MAC CE, and one or more CSI reporting sub-configurations associated with the same CSI reporting configuration can be activated, thereby implementing CSI reporting of a plurality of CSI reporting configurations and CSI reporting sub-configurations triggered in a single L1/L2 signaling transmission.

Optionally, the target information is a second MAC CE; and
the second MAC CE includes status indication information of a plurality of CSI reporting sub-configurations associated with each of a plurality of CSI reporting configurations, and the plurality of CSI reporting configurations include the target CSI reporting configuration.

In an implementation, the target information is a second MAC CE, and the second MAC CE includes a first part and a second part, where the first part and the second part are arranged in a top-to-bottom order;
the first part includes at least serving cell indication information and BWP indication information; and
the second part includes status indication information of a plurality of CSI reporting sub-configurations associated with each of a plurality of CSI reporting configurations, and in the second part, in ascending order of identifiers of the plurality of CSI reporting configurations, the CSI reporting sub-configurations associated with the plurality of CSI reporting configurations are arranged from right to left, where the plurality of CSI reporting sub-configurations associated with each CSI reporting configuration are arranged from right to left in ascending order of identifiers of the CSI reporting sub-configurations.

In an implementation, the number of bits occupied by the status indication information of the plurality of CSI reporting sub-configurations associated with each CSI reporting configuration is determined based on the number of CSI reporting sub-configurations configured or activated by each CSI reporting configuration.

As a specific embodiment, the second MAC CE is a new MAC CE, the second MAC CE has only a function of activating sub-configuration CSI reporting, and the legacy MAC CE for activating a CSI report config may continue to be used.

As shown in FIG. 7b, B represents a state of L sub-configurations contained in a semi-persistent CSI-ReportConfig that is configured by RRC and included in ReportConfigToAddModList; Bij refers to a sub-configuration belonging to an Si reporting configuration; the number of bits occupied by Bij is related to the number of sub-configurations configured/activated by Si; for example, B00 refers to an activation state (activated/deactivated) of a sub-configuration with the smallest sub-configId in a CSI-ReportConfig with the smallest CSI-ReportConfigId among all semi-persistent CSI reporting configurations; B01 refers to an activation state (activated/deactivated) of a sub-configuration with the second smallest sub-configId in a CSI-ReportConfig with the smallest CSI-ReportConfigId among all semi-persistent CSI reporting configurations; and B10 refers to an activation state (activated/deactivated) of a sub-configuration with the smallest sub-configId in a CSI-ReportConfig with the second smallest CSI-ReportConfigId among all semi-persistent CSI reporting configurations.

In this implementation, the target information is a second MAC CE, and the second MAC CE includes status indication information of a plurality of CSI reporting sub-configurations associated with each of a plurality of CSI reporting configurations, so that one or more CSI reporting sub-configurations associated with the same CSI reporting configuration can be activated simultaneously via the second MAC CE, thereby implementing CSI reporting of a plurality of CSI reporting sub-configurations triggered in a single L1/L2 signaling transmission.

Optionally, the target information is a third MAC CE, and the third MAC CE includes status indication information of CSI reporting sub-configurations associated with all activated CSI reporting configurations on a BWP to which the third MAC CE is applied.

In an implementation, the target information is a third MAC CE, and the third MAC CE includes a first part and a second part, where the first part and the second part are arranged in a top-to-bottom order;
the first part includes at least serving cell indication information and BWP indication information; and
the second part includes status indication information of CSI reporting sub-configurations associated with all activated CSI reporting configurations on a BWP to which the third MAC CE is applied, and the CSI reporting sub-configurations are arranged from right to left in ascending order of identifiers of the CSI reporting sub-configurations.

As a specific embodiment, the third MAC CE is a new MAC CE, the MAC CE has only a function of activating sub-configuration CSI reporting, and the legacy MAC CE may continue to be used.

As shown in FIG. 7c, the third MAC CE supports only activation of sub-configuration CSI reporting, Sub0 indicates an activation state (activated/deactivated) of a sub-configuration with the smallest sub-configuration Id among all activated CSI report configs of the BWP ID, Sub1 indicates an activation state (activated/deactivated) of a sub-configuration with the second smallest sub-configuration Id among all activated CSI report configs of the BWP ID, and so on, which is not repeated herein.

In this implementation, the target information is a third MAC CE, and the third MAC CE includes status indication information of CSI reporting sub-configurations associated with all activated CSI reporting configurations on a BWP to which the third MAC CE is applied, so that one or more CSI reporting sub-configurations associated with one CSI reporting configuration can be activated simultaneously through the third MAC CE, thereby implementing CSI reporting of a plurality of CSI reporting sub-configurations triggered in a single L1/L2 signaling transmission.

Optionally, the DCI is used to activate a trigger state triggerState, and the triggerState is configured by RRC.

Optionally, in a case that the triggerState is used for aperiodic CSI reporting, the triggerState includes a plurality of CSI-associated reporting configuration information CSI-AssociatedReportConfigInfos, and each CSI-AssociatedReportConfigInfo includes: a to-be-activated target CSI reporting configuration identifier, a to-be-measured CSI-RS resource, and sub-configuration state information;
or
in a case that the triggerState is used for semi-persistent CSI reporting, the triggerState includes one CSI-AssociatedReportConfigInfo, and the CSI-AssociatedReportConfigInfo includes: a to-be-activated target CSI reporting configuration identifier, a to-be-measured CSI-RS resource, and sub-configuration state information; where
the sub-configuration state information includes: an identifier list of to-be-activated CSI reporting sub-configurations or a bitmap bitmap of activation states of all CSI reporting sub-configurations associated with a target CSI reporting configuration.

In this embodiment, a DCI codepoint (codepoint) activates a triggerState, thereby activating one or more aperiodic sub-configuration CSI reports in a plurality of aperiodic CSI reporting configurations; and a DCI codepoint activates a triggerState, thereby activating one or more semi-persistent sub-configuration CSI reports in a plurality of semi-persistent CSI reporting configurations.

In an implementation, a design of an aperiodic triggerState is as follows: each CSI-AperiodicTriggerState contains a plurality of CSI-AssociatedReportConfigInfos; and
each CSI-AssociatedReportConfigInfo includes:

```
         {
         a reporting configuration identifier (reportConfigId);
         resourcesForChannel, where each resourcesForChannel contains one
         nzp-CSI-RS or one csi-SSB-ResourceSet; and
         a bitmap (bitmap) of activation states of included sub-configurations or
 an Id list CSI-ReportSubConfigIdList (or bitmap) of to-be-activated
 sub-configurations.
         }
```

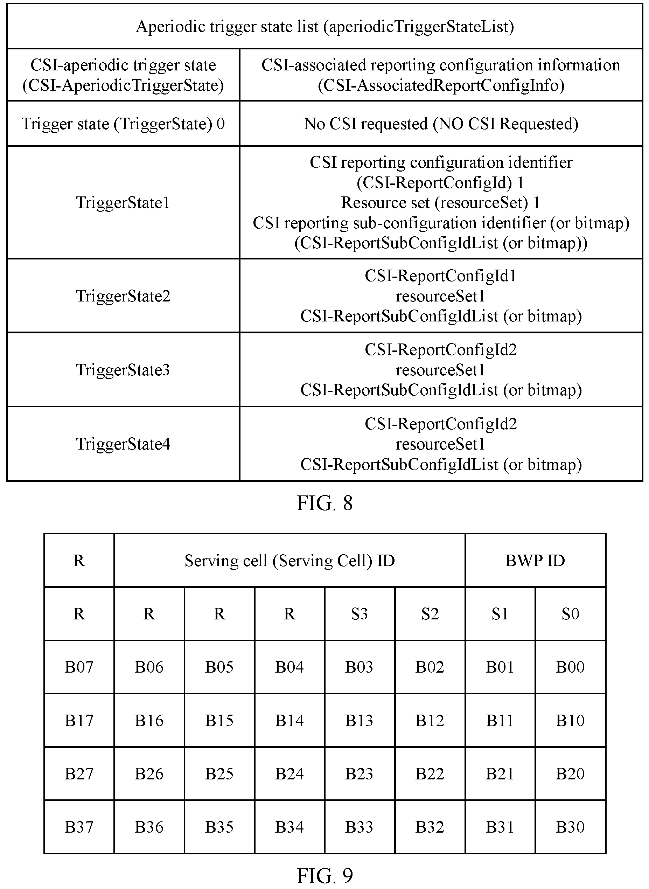

Taking FIG. 8 as an example, each CSI-AperiodicTriggerState may contain a plurality of CSI-AssociatedReportConfigInfos. For ease of description, this embodiment includes only one AssociatedReportConfigInfo: each AssociatedReportConfigInfo contains CSI-ReportSubConfigIdList or bitmap. CSI-ReportSubConfigIdList refers to a list of a set of to-be-activated sub-configuration Ids, or CSI-ReportSubConfigId (or bitmap) indicates an activation state (activated/deactivated) of each sub-configuration in a form of a bitmap, a bit length of each CSI-ReportSubConfigId is a quantity L of sub-configurations contained in a CSI-ReportConfig to which it belongs, and the most significant bit of the bitmap represents an activation state (activated/deactivated) of a sub-configuration with the smallest or largest sub-configuration Id, and the remaining bits correspond one-to-one to the sub-configurations in ascending or descending order of sub-configuration Ids.

In an implementation, a design of a semi-persistent triggerState is as follows: a semi-persistent CSI-SemiPersistentOnPUSCH-TriggerState includes only one associatedReportConfigInfo, and each associatedReportConfigInfo corresponds to one CSI-ReportConfigId and CSI-ReportSubConfigIdList (or bitmap), which is similar to the foregoing aperiodic triggerState.

It should be noted that a current protocol framework does not support L1 signaling to trigger aperiodic sub-config CSI reports of a plurality of spatial domain (SD)/power domain (power domain, PD) adaptation patterns (adaptation pattern). However, this embodiment can implement triggering a plurality of sub-config CSI reports by one DCI through designing a new DCI trigger state.

Optionally, the target CSI reporting sub-configuration includes at least one of the following:
an identifier of the target CSI reporting sub-configuration;
first spatial domain information;
second spatial domain information; and
power domain information; where
the first spatial domain information includes: a port subset indication; a rank restriction; and a codebook subset restriction; and
the second spatial domain information includes at least one non-zero power CSI reference signal CSI-RS resource.

In an implementation, the target CSI reporting sub-configuration includes the following parameters:
an Id of the target CSI reporting sub-configuration, for example, CSI-ReportSubConfigId;
spatial domain-related information (including first spatial domain information and second spatial domain information); and
power domain-related information.

The spatial domain-related information includes:
a port subset indication, which may be used in a case of Type I shutdown to distinguish patterns of different port shutdowns;
a rank restriction (Rank restriction), which may be used in Type I shutdown, where different shutdown patterns may have different rank restrictions;
a codebook subset restriction (codebookSubsetRestriction), which may be used in Type I shutdown, where different shutdown patterns may have different codebook subset restrictions; and
one or a set of non-zero power CSI-RS resources, which may be used in Type II shutdown, where different resources represent different antenna port shutdown patterns.

The one non-zero power CSI-RS resource or a set of non-zero power CSI-RS resources may formally be a list of non-zero power CSI-RS resource Ids NZP-CSI-RS-ResourceList, or a group identifier of a CSI-RS resource group; or may formally be an Index of an NZP-CSI-RS resource included in a primary configuration, for example, a plurality of NZP-CSI-RS resources are configured and associated in a CSI report config (named as a primary configuration) associated with a sub-configuration, the NZP-CSI-RS resources are numbered according to Id sizes, the numbering may be used as an index (Index), and each sub-config may be associated with some of the NZP-CSI-RS resources in a form of a set of indexes. NZP-CSI-RS refers to a non-zero power CSI-RS (Non-Zero Power CSI-RS).

It should be noted that a purpose of a UE reporting CSI for a plurality of SD/PD adaptation patterns is to assist a base station in making a decision on TxRU shutdown. When the UE reports CSI corresponding to a plurality of shutdown patterns, the base station can ascertain for which shutdown patterns the CSI performance is better, and accordingly, the network side may be more inclined towards that shutdown pattern during decision-making.

Optionally, in a case that the target CSI reporting sub-configuration includes the first spatial domain information and does not include the second spatial domain information, the sending, by the terminal, CSI to the network-side device based on the target CSI reporting sub-configuration includes: determining, by the terminal based on the first spatial domain information, a parameter required for calculating CSI corresponding to the target CSI reporting sub-configuration, and sending the CSI corresponding to the target CSI reporting sub-configuration to the network-side device; or
in a case that the target CSI reporting sub-configuration includes the second spatial domain information and does not include the first spatial domain information, the sending, by the terminal, CSI to the network-side device based on the target CSI reporting sub-configuration includes: determining, by the terminal based on the second spatial domain information, a CSI-RS measurement resource associated with the target CSI reporting sub-configuration, and sending CSI corresponding to the target CSI reporting sub-configuration to the network-side device; or
in a case that the target CSI reporting sub-configuration includes the first spatial domain information and the second spatial domain information, the sending, by the terminal, CSI to the network-side device based on the target CSI reporting sub-configuration includes: determining, by the terminal based on the second spatial domain information, a CSI-RS measurement resource associated with the target CSI reporting sub-configuration, and sending CSI corresponding to the target CSI reporting sub-configuration to the network-side device; or
in a case that the target CSI reporting sub-configuration includes the power domain information, the sending, by the terminal, CSI to the network-side device based on the target CSI reporting sub-configuration includes: determining, the terminal based on the power domain information, a parameter required for calculating CSI corresponding to the target CSI reporting sub-configuration, and sending CSI corresponding to the target CSI reporting sub-configuration to the network-side device.

The parameter required for calculating the CSI corresponding to the target CSI reporting sub-configuration may include at least one of the following: a port subset, a rank restriction, a codebook subset restriction, and one or a set of non-zero power CSI-RS resources. Taking a non-zero power CSI-RS resource as an example, the parameter required for calculating the CSI corresponding to the target CSI reporting sub-configuration may include: a power control offset value of a non-zero power CSI-RS resource.

In an implementation, parameter configuration of a CSI reporting sub-configuration (for example, the target CSI reporting sub-configuration) meets the following requirement: parameters of Type I shutdown and Type II shutdown are configured on an either-or basis.

For example, if the CSI reporting sub-configuration includes parameters of Type I shutdown, the UE calculates the CSI for the CSI reporting sub-configuration by overwriting the corresponding parameters in the primary configuration with the parameter of Type I shutdown in the CSI reporting sub-configuration. The primary configuration refers to a CSI reporting configuration associated with the CSI reporting sub-configuration. For example, if a rank restriction and a codebook subset restriction are configured in the primary configuration, but the sub-configuration also includes its own rank restriction and the codebook subset restriction. The UE refers to the rank restriction and the codebook subset restriction included in the sub-configuration when calculating CSI of the sub-configuration.

For example, if the CSI reporting sub-configuration includes parameters of Type II shutdown, the UE calculates the CSI for the CSI reporting sub-configuration according to one or a set of NZP-CSI-RS resource resources included in the CSI reporting sub-configuration.

In an implementation, if the CSI reporting sub-configuration includes both a parameter of Type I shutdown and a parameter of Type II shutdown, the UE calculates the CSI for the CSI reporting sub-configuration according to one or a set of NZP-CSI-RS resources resources included in the CSI reporting sub-configuration; that is, the CSI for the CSI reporting sub-configuration is calculated according to the parameters of Type II shutdown.

In an implementation, if the CSI reporting sub-configuration includes parameters of PD, the UE calculates the CSI for the CSI reporting sub-configuration by overwriting the corresponding parameters in the primary configuration with the parameters of PD.

This embodiment can address the issue of spatial domain (SD)/power domain (PD) joint configuration (joint configuration) in a CSI reporting sub-configuration. Through this embodiment, a terminal can determine which parameters to refer to for calculating CSI when the CSI reporting sub-configuration includes a plurality of types of parameters. For example, it clarifies how to perform CSI reporting for a CSI reporting sub-configuration when both spatial domain (SD) adaptation (adaptation) (Type I shutdown + Type II shutdown) and power domain (PD) adaptation parameters are included.

Optionally, the target CSI reporting sub-configuration includes the power domain information, and the power domain information includes: a target power control offset value or a first target power control offset value list, where the first target power control offset value list includes a plurality of target power control offset values; and
the sending, by the terminal, CSI to the network-side device based on the target CSI reporting sub-configuration includes:
if the target CSI reporting sub-configuration does not include the second spatial domain information, determining, by the terminal based on the power domain information, power control offset values of all non-zero power CSI-RS resources included in a CSI-RS resource set for channel measurement associated with the target CSI reporting sub-configuration; and determining, by the terminal, CSI corresponding to the target CSI reporting sub-configuration based on the power control offset values; or
if the target CSI reporting sub-configuration includes the second spatial domain information, determining, by the terminal based on the power domain information, power control offset values of non-zero power CSI-RS resources included in the target CSI reporting sub-configuration; and determining, by the terminal, CSI corresponding to the target CSI reporting sub-configuration based on the power control offset values; and
sending, by the terminal, the CSI corresponding to the target CSI reporting sub-configuration to the network-side device.

The power domain-related information may include a target power control offset (powerControlOffset) value, and the power control offset value may also be described as a power offset value. A powerControlOffset value in the power domain-related information may be a single value. If the CSI reporting sub-configuration (for example, the target CSI reporting sub-configuration) does not include parameters for Type II shutdown, that is, the CSI reporting sub-configuration does not include a set of NZP-CSI-RS resources, the powerControlOffset value is applied to all NZP-CSI-RS resources included in a CSI-RS resource set for channel measurement associated with the primary configuration CSI report config corresponding to the CSI reporting sub-configuration. If the CSI reporting sub-configuration includes parameters for Type II shutdown, that is, the CSI reporting sub-configuration includes one or a set of NZP-CSI-RS resources, the powerControlOffset value is applied to all NZP-CSI-RS resources included in the CSI reporting sub-configuration.

For example, the CSI reporting sub-configuration includes second spatial domain information, the target power control offset value is a, and the CSI reporting sub-configuration includes three non-zero power CSI-RS resources. When calculating CSI for the CSI reporting sub-configuration, the CSI for the CSI reporting sub-configuration is calculated according to powerControlOffset values of the three non-zero power CSI-RS ResourceIds being all a.

For example, the CSI reporting sub-configuration does not include second spatial domain information, the target power control offset value is a, and all non-zero power CSI-RS resources included in a CSI-RS resource set for channel measurement in the primary configuration associated with the CSI reporting sub-configuration include three non-zero power CSI-RS resources. When calculating CSI for the CSI reporting sub-configuration, the CSI for the CSI reporting sub-configuration is calculated according to powerControlOffset values of the three non-zero power CSI-RS ResourceIds being all a.

The power domain-related information may include a first target power control offset value list, the first target power control offset value list includes parameters (parameter) of PD, the first target power control offset value list refers to a set of powerControlOffset values, and the number of elements in the first target power control offset value list is related to the following:

If the CSI reporting sub-configuration does not include parameters for Type II shutdown, that is, the CSI reporting sub-configuration does not include one or a set of NZP-CSI-RS resources, the number of elements in the first target power control offset value list is related to the number of NZP-CSI-RS resources included in a CSI-RS resource set (resource set) associated with a primary configuration CSI report config corresponding to the CSI reporting sub-configuration. In an implementation, element values in the first target power control offset value list correspond one-to-one to NZP-CSI-RS resources included in the CSI-RS resource set for channel measurement that are associated with the primary configuration CSI report config, in ascending or descending order of resource identifiers (resourceId).

If the CSI reporting sub-configuration includes parameters for Type II shutdown, that is, the CSI reporting sub-configuration includes one or a set of NZP-CSI-RS resources, the number of elements in the first target power control offset value list is related to the number of the set of NZP-CSI-RS resources. In an implementation, element values in the first target power control offset value list correspond one-to-one to a set of NZP-CSI-RS resources included in the CSI reporting sub-configuration in ascending or descending order of resourceIds.

In this implementation, in a case that the power domain information includes a target power control offset value or a first target power control offset value list, the terminal can determine, according to the target power control offset value or the first target power control offset value list, power control offset values of all non-zero power CSI-RS resources included in the CSI-RS resource set for channel measurement that are associated with the target CSI reporting sub-configuration or power control offset values of non-zero power CSI-RS resources included in the target CSI reporting sub-configuration, and perform channel measurement according to the determined power control offset values to obtain CSI, thereby performing CSI reporting for the target CSI reporting sub-configuration.

Optionally, in a case that the power domain information includes the first target power control offset value list:
if the target CSI reporting sub-configuration does not include the second spatial domain information, the number of target power control offset values in the first target power control offset value list corresponds to the number of all non-zero power CSI-RS resources included in a CSI-RS resource set for channel measurement in a target CSI reporting configuration associated with the target CSI reporting sub-configuration;
   or
if the target CSI reporting sub-configuration includes the second spatial domain information, the number of target power control offset values in the first target power control offset value list corresponds to the number of all non-zero power CSI-RS resources included in the target CSI reporting sub-configuration.

In an implementation, if the target CSI reporting sub-configuration does not include the second spatial domain information, the number of target power control offset values in the first target power control offset value list is the same as the number of all non-zero power CSI-RS resources included in a CSI-RS resource set for channel measurement in a target CSI reporting configuration associated with the target CSI reporting sub-configuration.

In an implementation, if the target CSI reporting sub-configuration includes the second spatial domain information, the number of target power control offset values in the first target power control offset value list is the same as the number of all non-zero power CSI-RS resources included in the target CSI reporting sub-configuration.

Optionally, a plurality of target power control offset values in the first target power control offset value list correspond one-to-one to all non-zero power CSI-RS resources included in a CSI-RS resource set for channel measurement in a target CSI reporting configuration associated with the target CSI reporting sub-configuration in ascending or descending order of CSI-RS resource identifiers;
or
a plurality of target power control offset values in the first target power control offset value list correspond one-to-one to all non-zero power CSI-RS resources included in the target CSI reporting sub-configuration in ascending or descending order of CSI-RS resource identifiers.

Taking correspondence one-to-one in ascending order of CSI-RS resource identifiers (ResourceId) as an example, the CSI reporting sub-configuration includes second spatial domain information, the first target power control offset value list is {a, b, c}, and the CSI reporting sub-configuration includes three non-zero power CSI-RS resources. When calculating CSI for the CSI reporting sub-configuration, the CSI for the CSI reporting sub-configuration is calculated according to powerControlOffset values corresponding to the three non-zero power CSI-RS ResourceIds in ascending order of the ResourceIds, being {a, b, c} respectively.

Taking correspondence one-to-one in ascending order of CSI-RS resource identifiers (ResourceId) as an example, the CSI reporting sub-configuration does not include second spatial domain information, the first target power control offset value list is {a, b, c}, and all non-zero power CSI-RS resources included in a CSI-RS resource set for channel measurement in the primary configuration associated with the CSI reporting sub-configuration include three non-zero power CSI-RS resources. When calculating CSI for the CSI reporting sub-configuration, the CSI for the CSI reporting sub-configuration is calculated according to powerControlOffset values corresponding to the three non-zero power CSI-RS ResourceIds in ascending order of the ResourceIds, being {a, b, c} respectively.

Optionally, the target CSI reporting sub-configuration includes the power domain information, and the power domain information includes a power control offset value index or a power control offset value index list;
the sending, by the terminal, CSI to the network-side device based on the target CSI reporting sub-configuration includes:
determining, by the terminal, a power control offset value from candidate power control offset values of non-zero power CSI-RS resources associated with the target CSI reporting sub-configuration based on the power control offset value index or the power control offset value index list;
determining, by the terminal, CSI corresponding to the target CSI reporting sub-configuration based on the power control offset value; and
sending, by the terminal, the CSI corresponding to the target CSI reporting sub-configuration to the network-side device.

The power domain-related information may include a power control offset value index (Index). The power control offset value index may refer to a mapping between a set of candidate (candidate) powerControlOffset values configured for CSI-RS resources associated with the CSI reporting sub-configuration (sub-config);
for example, if the CSI reporting sub-configuration does not include a set of NZP-CSI-RS resources, and the CSI-RS resources of the primary configuration associated with the CSI reporting sub-configuration is associated with three NZP-CSI-RS-Resources, where:
NZP-CSI-RS resource 1 is configured with a set of powerControlOffset values: {a1 a2 a3 a4 a5 a6};
NZP-CSI-RS resource 2 is configured with a set of powerControlOffset values: {b1 b2 b3 b4 b5 b6}; and
NZP-CSI-RS resource 3 is configured with a set of powerControlOffset values: {c1 c2 c3 c4 c5 c6}; and
if the power control offset value Index is 1, it means that when calculating CSI corresponding to the sub-configuration, a first powerControlOffset value of the three NZP-CSI-RS-Resources takes effect, that is, a powerControlOffset value of resource1 is a1, a powerControlOffset value of resource2 is b1, and a powerControlOffset value of resource3 is c1.

For example, if the CSI reporting sub-configuration includes a set of NZP-CSI-RS resources, with a quantity of 4, where:
NZP-CSI-RS resource 1 is configured with a set of powerControlOffset values: {a1 a2 a3 a4 a5 a6};
NZP-CSI-RS resource 2 is configured with a set of powerControlOffset values: {b1 b2 b3 b4 b5 b6};
NZP-CSI-RS resource 3 is configured with a set of powerControlOffset values: {c1 c2 c3 c4 c5 c6}; and
NZP-CSI-RS resource 4 is configured with a set of powerControlOffset values: {dl d2 d3 d4 d5 d6}; and
if the power control offset value Index is 2, it means that when calculating CSI corresponding to the sub-configuration, the second powerControlOffset values of these referenced four NZP-CSI-RS-Resources take effect, specifically, a powerControlOffset value of resource1 is a2, a powerControlOffset value of resource2 is b2, a powerControlOffset value of resource3 is c2, and a powerControlOffset value of resource4 is d2.

The power domain-related information may include a power control offset value Index list, and each element in the power control offset value Index list corresponds to a number of a powerControlOffset value of each CSI-RS resource in all candidate powerControlOffset in an ascending or descending order of CSI-RS resource Ids in resources associated with the CSI reporting sub-configuration;
for example, the CSI-RS resources of the primary configuration associated with the CSI reporting sub-configuration is associated with three NZP-CSI-RS-Resources, where:
NZP-CSI-RS resource 1 is configured with a set of powerControlOffset values: {a1 a2 a3 a4 a5 a6};
NZP-CSI-RS resource 2 is configured with a set of powerControlOffset values: {b1 b2 b3 b4 b5 b6}; and
NZP-CSI-RS resource 3 is configured with a set of powerControlOffset values: {c1 c2 c3 c4 c5 c6}; and
if the power control offset value Index list is {1, 2, 1}, it means that when calculating CSI corresponding to the CSI reporting sub-configuration, the first powerControlOffset value a1 of NZP-CSI-RS Resource1 takes effect, the second powerControlOffset value b2 of NZP-CSI-RS Resource2 takes effect, and the first powerControlOffset value c1 of NZP-CSI-RS Resource3 takes effect.

For example, if the CSI reporting sub-configuration includes a set of NZP-CSI-RS resources, with a quantity of 4, where:
NZP-CSI-RS resource 1 is configured with a set of powerControlOffset values: {a1 a2 a3 a4 a5 a6};
NZP-CSI-RS resource 2 is configured with a set of powerControlOffset values: {b1 b2 b3 b4 b5 b6};
NZP-CSI-RS resource 3 is configured with a set of powerControlOffset values: {c1 c2 c3 c4 c5 c6}; and
NZP-CSI-RS resource 4 is configured with a set of powerControlOffset values: {d1 d2 d3 d4 d5 d6}; and
if the power control offset value Index list is {1, 2, 1, 3}, it means that when calculating CSI corresponding to the CSI reporting sub-configuration, for these 4 referenced CSI-RSs, the first powerControlOffset value a1 of referenced NZP-CSI-RS Resource1 takes effect, the second powerControlOffset value b2 of NZP-CSI-RS Resource2 takes effect, the first powerControlOffset value c1 of NZP-CSI-RS Resource3 takes effect, and the third powerControlOffset value d3 of NZP-CSI-RS Resource4 takes effect.

In this implementation, in a case that the power domain information includes a power control offset value index or a power control offset value index list, the terminal can determine a power control offset value from candidate power control offset values of non-zero power CSI-RS resources associated with the target CSI reporting sub-configuration according to the power control offset value index or the power control offset value index list, and perform channel measurement according to the determined power control offset value to obtain CSI, thereby performing CSI reporting for the target CSI reporting sub-configuration.

Optionally, there is a mapping relationship between the power control offset value index and candidate power control offset values of each non-zero power CSI-RS resource in a plurality of non-zero power CSI-RS resources associated with the target CSI reporting sub-configuration;
or
there is a one-to-one mapping relationship between a plurality of power control offset value indexes in the power control offset value index list and candidate power control offset values of a plurality of non-zero power CSI-RS resources associated with the target CSI reporting sub-configuration.

Optionally, the target CSI reporting sub-configuration includes the power domain information, and the power domain information includes a second target power control offset value list or a power control offset value offset, where the second target power control offset value list is used to characterize an offset relative to a power control offset value of each non-zero power CSI-RS resource associated with the target CSI reporting sub-configuration, and the power control offset value offset is used to characterize an offset relative to a power control offset value of each non-zero power CSI-RS resource associated with the target CSI reporting sub-configuration; and
the sending, by the terminal, CSI to the network-side device based on the target CSI reporting sub-configuration includes:
determining, by the terminal based on the second target power control offset value list, an offset amount of a power control offset value of each non-zero power CSI-RS resource associated with the target CSI reporting sub-configuration relative to a first original value, or determining, by the terminal based on the power control offset value offset, an offset amount of a power control offset value of each non-zero power CSI-RS resource associated with the target CSI reporting sub-configuration relative to a second original value; where the first original value is a power control offset value of each non-zero power CSI-RS resource associated with a target CSI reporting configuration corresponding to the target CSI reporting sub-configuration, and the second original value is a power control offset value of each non-zero power CSI-RS resource associated with the target CSI reporting sub-configuration;
determining, by the terminal, CSI corresponding to the target CSI reporting sub-configuration based on the determined power control offset value; and
sending, by the terminal, the CSI corresponding to the target CSI reporting sub-configuration to the network-side device.

The power control offset value offset may be an offset value relative to powerControlOffset of an original CSI-RS resource. The second target power control offset value list may be an offset value list relative to powerControlOffset of an original CSI-RS resource.

For example, the CSI-RS resources of the primary configuration associated with the CSI reporting sub-configuration is associated with three NZP-CSI-RS-Resources, where:
a powerControlOffset value of NZP-CSI-RS resource 1 is a;
a powerControlOffset value of NZP-CSI-RS resource 2 is b; and
a powerControlOffset value of NZP-CSI-RS resource 3 is c; and
if the power control offset value offset is 2, when calculating CSI corresponding to the CSI reporting sub-configuration, the powerControlOffset value of NZP-CSI-RS Resource1 is increased or decreased by 2 dB relative to its original value a, the powerControlOffset value of NZP-CSI-RS Resource2 is increased or decreased by 2 dB relative to its original value b, and the powerControlOffset value of NZP-CSI-RS Resource3 is increased or decreased by 2 dB relative to its original value c.

For example, the CSI reporting sub-configuration includes four CSI-RS resources, where:
a powerControlOffset value of NZP-CSI-RS resource 1 is a;
a powerControlOffset value of NZP-CSI-RS resource 2 is b;
a powerControlOffset value of NZP-CSI-RS resource 3 is c; and
a powerControlOffset value of NZP-CSI-RS resource 4 is d; and
if the power control offset value offset is 2, when calculating CSI corresponding to the CSI reporting sub-configuration, the powerControlOffset value of NZP-CSI-RS Resource1 is increased or decreased by 2 dB relative to its original value a, the powerControlOffset value of NZP-CSI-RS Resource2 is increased or decreased by 2 dB relative to its original value b, the powerControlOffset value of NZP-CSI-RS Resource3 is increased or decreased by 2 dB relative to its original value c, and the powerControlOffset value of NZP-CSI-RS Resource4 is increased or decreased by 2 dB relative to its original value d.

For example, the CSI-RS resources of the primary configuration associated with the CSI reporting sub-configuration is associated with three NZP-CSI-RS-Resources, where:
a powerControlOffset value of NZP-CSI-RS resource 1 is a;
a powerControlOffset value of NZP-CSI-RS resource 2 is b; and
a powerControlOffset value of NZP-CSI-RS resource 3 is c; and
if the second target power control offset value list is {1, 2, 1}, when calculating CSI corresponding to the CSI reporting sub-configuration, the powerControlOffset value of NZP-CSI-RS Resource1 is increased or decreased by 1 dB relative to its original value a, the powerControlOffset value of NZP-CSI-RS Resource2 is increased or decreased by 2 dB relative to its original value b, and the powerControlOffset value of NZP-CSI-RS Resource3 is increased or decreased by 1 dB relative to its original value c.

For example, the CSI reporting sub-configuration includes four CSI-RS resources, where:
a powerControlOffset value of NZP-CSI-RS resource 1 is a;
a powerControlOffset value of NZP-CSI-RS resource 2 is b;
a powerControlOffset value of NZP-CSI-RS resource 3 is c; and
a powerControlOffset value of NZP-CSI-RS resource 4 is d; and
if the second target power control offset value list is {1, 2, 1, 3}, when calculating CSI corresponding to the CSI reporting sub-configuration, the powerControlOffset value of NZP-CSI-RS Resource1 is increased or decreased by 1 dB relative to its original value a, the powerControlOffset value of NZP-CSI-RS Resource2 is increased or decreased by 2 dB relative to its original value b, the powerControlOffset value of NZP-CSI-RS Resource3 is increased or decreased by 1 dB relative to its original value c, and the powerControlOffset value of NZP-CSI-RS Resource4 is increased or decreased by 3 dB relative to its original value d.

In this implementation, in a case that the power domain information includes a second target power control offset value list, the terminal can determine, according to the second target power control offset value list, an offset amount of a power control offset value of each non-zero power CSI-RS resource associated with the target CSI reporting sub-configuration relative to an original value, and perform channel measurement according to the determined power control offset value to obtain CSI, thereby performing CSI reporting for the target CSI reporting sub-configuration.

Optionally, the sending, by the terminal, CSI to the network-side device based on the target CSI reporting sub-configuration includes:
in a case that a plurality of power control offset values are configured in non-zero power CSI-RS resources for channel measurement associated with the target CSI reporting configuration and the target CSI reporting sub-configuration does not exist, determining, by the terminal, CSI corresponding to the target CSI reporting configuration based on a first power control offset value in the non-zero power CSI-RS resources; and
sending, by the terminal, the CSI corresponding to the target CSI reporting configuration to the network-side device.

In an implementation, if a plurality of powerControlOffset values (value) are configured in an NZP-CSI-RS resource for channel measurement associated with a CSI report config, and the CSI report config is not activated for sub-configuration reporting, the UE calculates the CSI for the CSI report config according to a first powerControlOffset value of each resource.

In this implementation, in a case that a plurality of power control offset values are configured in non-zero power CSI-RS resources for channel measurement associated with the target CSI reporting configuration and the target CSI reporting sub-configuration does not exist, the terminal performs channel measurement according to a first power control offset value in the non-zero power CSI-RS resources to obtain CSI, thereby performing CSI reporting for the target CSI reporting sub-configuration.

Optionally, in a case that a CSI-RS resource is associated with one or more CSI reporting configurations and CSI reporting sub-configurations, the number of activated CSI-RS ports Nrofports and a counting manner of CSI-RS resources at a target time are as follows:
if the CSI-RS resource is referred N times by the one or more CSI reporting configurations and CSI reporting sub-configurations, the CSI-RS resource and the number of CSI-RS ports corresponding to the CSI-RS resource are counted N times, where N is a positive integer.

In an implementation, if one CSI report config includes one or more CSI report sub-configs, a counting manner of the number of CSI-RS port Nrofports/simultaneously activated resources (simultaneous activate resource) is as follows:
if a CSI-RS resource is referred N times by one or more sub-configuration CSI reports, the CSI-RS resource and its corresponding number of CSI-RS ports shall be counted N times.

It should be noted that because a CSI framework in the related art is changed to configure L sub-configs in one CSI report config, and N sub-configurations are activated, a counting manner of CSI-RS resources and nrofports in the related art needs to be adapted to the change.

This embodiment can address the issue of how to count (counting) the NZP-CSI-RS resources and their nrofports when one CSI report config includes a plurality of sub-config CSI reports.

Optionally, a first symbol count and a second symbol count corresponding to the target CSI reporting configuration meet a delay requirement agreed upon in a specification; where
the first symbol count is the number of symbols spaced between a physical downlink control channel (Physical downlink control channel, PDCCH) for scheduling the target CSI reporting configuration and CSI reporting; and
the second symbol count is the number of symbols spaced between a target non-zero power CSI-RS resource and CSI reporting, and the target non-zero power CSI-RS resource is a non-zero power CSI-RS resource for channel measurement with the earliest transmission time, associated with the target CSI reporting configuration and a CSI reporting sub-configuration corresponding to the target CSI reporting configuration.

In an implementation, if one CSI report config includes one or more CSI report sub-configs, then:
the number of symbols spaced between a PDCCH for scheduling the CSI report config and the CSI report (report) is denoted as Z;
the number of symbols spaced between the earliest NZP-CSI-RS resource for channel measurement associated with both the primary configuration CSI reporting and the sub-configuration CSI reporting in the CSI report config and the CSI report is denoted as Z'; and
the symbol count Z and the symbol count Z' comply with delay requirements specified in clauses 5.4-1 and 5.4-2 of TS 38.214 in the related art (specified in a protocol), where the delay requirements are defined as specific symbol counts. In the related art, the protocol specifies a processing delay, that is, a specific time duration, to mandate that the terminal device must complete channel measurement processing within this duration. Correspondingly, the base station may indicate, based on this duration, to the terminal where to report the CSI. Generally, the position of the CSI reporting should be after completion of channel measurement. It can be seen that processing delay of CSI is determined according to two parameters, namely, Z and Z'. The essential meaning is that Z is used to describe DCI parsing, while Z' is used to describe channel state measurement.

The protocol provides detailed values of Z and Z', as shown in Table 1 and Table 2. Table 1 and Table 2 are cited from protocol 38.214.

**Table 1**

| *µ* | *Z₁* [symbols (symbol)] | |
|---|---|---|
| | *Z₁* | *Z'₁* |
| 0 | 10 | 8 |
| 1 | 13 | 11 |
| 2 | 25 | 21 |
| 3 | 43 | 36 |

**Table 2**

| *µ* | *Z₁* [symbols (symbol)] | | *Z₂* [symbols] | | *Z₃* [symbols] | |
|---|---|---|---|---|---|---|
| | *Z₁* | *Z'₁* | *Z₂* | *Z'₂* | *Z₃* | *Z'₃* |
| 0 | 22 | 16 | 40 | 37 | 22 | *X*₀ |
| 1 | 33 | 30 | 72 | 69 | 33 | *X*₁ |
| 2 | 44 | 42 | 141 | 140 | min(44,*X*₂+ KB₁) | *X₂* |
| 3 | 97 | 85 | 152 | 140 | min(97, *X*₃+ KB₂) | *X*₃ |
| 5 | 388 | 340 | 608 | 560 | min(388,X5+ KB3) | *X5* |
| 6 | 776 | 680 | 1216 | 1120 | min(776,X6+ KB4) | *X6* |

Subscripts 1, 2, and 3 of Z represent different requirements. Table 1 and Table 2 correspond to two CSI computation (computation) delay (delay) requirements (requirement), Table 1 corresponds to requirement 1, and Table 2 corresponds to requirement 2. In Table 1 and Table 2, µ denotes a subcarrier spacing, Xµ corresponds to a UE-reported beam report timing capability beamReportTiming, and KBl is a UE-reported beam switch timing capability beamSwitchTiming, where 1 in KBl may be 1, 2, 3, or 4.

By comparing the data in Table 1 and Table 2, it can be observed that specific values of Z and Z' corresponding to Table 1 are significantly smaller than values in Table 2, meaning that processing delay corresponding to data in Table 1 should be shorter. Therefore, it can be understood that a requirement corresponding to requirement 1 should be more stringent.

This application further provides a counting method, where the counting method includes:
in a case that a CSI-RS resource is associated with one or more CSI reporting configurations and CSI reporting sub-configurations, the number of activated CSI-RS ports Nrofports and a counting manner of CSI-RS resources at a target time are as follows:
if the CSI-RS resource is referred N times by the one or more CSI reporting configurations and CSI reporting sub-configurations, the CSI-RS resource and the number of CSI-RS ports corresponding to the CSI-RS resource are counted N times, where N is a positive integer.

The target time may be a single slot (slot), meaning that in one slot, the number of activated CSI-RS ports or CSI-RS resources on an activated BWP cannot exceed a capability reported by a UE.

The information reporting method provided in the embodiments of this application is described through several specific embodiments:

In the following embodiments, a CSI reporting sub-configuration is referred to as a sub-configuration for short.

### Embodiment 1:

This embodiment describes a sub-configuration framework.

In this embodiment, the CSI reporting configuration includes a set of sub-configuration IDs, as follows:

```
         {
         CSI-ReportConfig ::= SEQUENCE {
             reportConfigId
             carrier
             resourcesForChannelMeasurement
             csi-IM-ResourcesForInterference
             nzp-CSI-RS-ResourcesForInterference
             subConfigurationldList
         }
```

The CSI reporting configuration includes a set of sub-configuration Ids, for example, subConfigurationIdList={1, 2, 4, 6, 7}, that is, the primary configuration includes five sub-configurations, and sub-configuration Ids are {1, 2, 4, 6, 7}.

Examples of sub-configurations are listed below:

### Example 1:

```
         {
         CSI-ReportSubConfiguration ::= SEQUENCE {
             CSI-ReportSubConfigId =1
             portSubsetIndication
             RI restriction
             codebookSubsetRestriction
             powerControlOffsetList }
         }
```

The sub-configuration Id=1 corresponds to one SD+PD adaptation pattern (adaptation pattern), which includes parameters for sub-configuration CSI calculation in a case of SD (spatial domain) TypeI shutdown (shutdown) and PD (power domain) adaptation (shutdown), and other required parameters refer to a main CSI report config to which the sub-configuration belongs.

### Example 2:

```
         {
         CSI-ReportSubConfiguration ::= SEQUENCE {
             CSI-ReportSubConfigId =2
             NZP-CSI-RS-ResourceList
             powerControlOffsetList }
         }
```

The sub-configuration Id=2 corresponds to one SD+PD adaptation pattern (adaptation pattern), which includes parameters and CSI-RS resources for sub-configuration CSI calculation in a case of SD (spatial domain) Type II shutdown (shutdown) and PD (power domain) adaptation (adaptation).

### Example 3:

```
         {
         CSI-ReportSubConfiguration ::= SEQUENCE {
             CSI-ReportSubConfigId =4
             NZP-CSI-RS-ResourceList }
         }
```

The sub-configuration Id=4 corresponds to one SD adaptation pattern (adaptation pattern), which includes CSI-RS resources for sub-configuration CSI calculation in a case of SD (spatial domain) TypeII shutdown (shutdown).

### Example 4:

```
         {
         CSI-ReportSubConfiguration ::= SEQUENCE {
             CSI-ReportSubConfigId =6
             portSubsetIndication
             RI restriction
             codebookSubsetRestriction}
         }
```

The sub-configuration Id=6 corresponds to one SD adaptation pattern (adaptation pattern), which includes parameters for sub-configuration CSI calculation in a case of SD (spatial domain) TypeI shutdown (shutdown).

### Example 5:

```
         {
         CSI-ReportSubConfiguration ::= SEQUENCE {
             CSI-ReportSubConfigId =7
             powerControlOffsetList
                     }
         }
```

The sub-configuration Id=7 corresponds to one PD adaptation pattern (adaptation pattern), which includes parameters for sub-configuration CSI calculation in a case of PD (power domain) adaptation (adaptation).

### Embodiment 2:

In the primary CSI report config, there are four CSI-RS resources for channel measurement included in a CSI-ResourceConfigId corresponding to resourcesForChannelMeasurement, NZP-CSI-RS Resources Ids = 1, 2, 3, 4, while a sub-configuration includes both a set of CSI-RS resource Ids=5, 6, 7 and parameters of PD adaptation (adaptation). There are the following configuration modes for parameters related to the PD adaptation:
Mode 1: powerControlOffset values are explicitly configured in the sub-configuration. As the sub-configuration includes three CSI-RS resources, three powerControlOffset values shall be configured, assuming that the values are configured as {a, b, c}. When calculating CSI for the sub-configuration, the sub-configuration CSI is calculated according to powerControlOffset values of the three CSI-RS ResourceIds in ascending order of the ResourceIds, being {a, b, c} respectively.
Mode 2: powerControlOffset offset values are explicitly configured in the sub-configuration. As the sub-configuration includes three CSI-RS Resources, three powerControlOffset offset values shall be configured. Assuming that original powerControlOffset values of CRI-RS resource Id=5, 6, 7 are {a, b, c}, and if the powerControlOffset offset value configured in the sub-configuration is {i, j, k}, when calculating CSI for the sub-configuration, the sub-configuration CSI is calculated according to powerControlOffset values of the three CSI-RS ResourceIds in ascending order of the ResourceIds, being {a+i, b+j, c+k} or {a-i, b-j, c-k} respectively.
Mode 3: The sub-configuration includes three CSI-RS resources, and powerControlOffset configuration values of each CSI-RS resource are as follows:
   a candidate for a powerControlOffset value of NZP-CSI-RS resource 1 is {al, a2, a3, a4, a5};
   a candidate for a powerControlOffset value of NZP-CSI-RS resource 2 is {b1, b2, b3, b4, b5}; and
   a candidate for a powerControlOffset value of NZP-CSI-RS resource 3 is {c1, c2, c3, c4, c5};
   if powerControlOffsetList in the sub-configuration is configured as {1}, it may be understood that the first candidate value of all resources in the sub-configuration takes effect, that is, the powerControlOffset of NZP-CSI-RS resource 1 is a1, the powerControlOffset of NZP-CSI-RS resource 2 is b1, and the powerControlOffset of NZP-CSI-RS resource 3 is c1;
   that is, an element value X in powerControlOffsetList represents that the X-th powerControlOffset value of all CSI-RS resources in the sub-configuration takes effect; and
   if powerControlOffsetList in the sub-configuration is configured as {2, 3, 1}, it may be understood that the powerControlOffset of NZP-CSI-RS resource 1 is a2, the powerControlOffset of NZP-CSI-RS resource 2 is b3, and the powerControlOffset of NZP-CSI-RS resource 3 is c1;
   that is, the first element value X in powerControlOffsetList represents that the X-th powerControlOffset of the NZP-CSI-RS resource with the smallest resource Id in the sub-configuration takes effect, the second element value Y represents that the Y-th powerControlOffset of the NZP-CSI-RS resource with the second smallest resource Id in the sub-configuration takes effect, ..., and meanings of element values in other positions are deduced by analogy.

### Embodiment 3:

This embodiment describes a design of a MAC CE for activating sub-configuration CSI reporting.

This embodiment provides a MAC CE for activating sub-configuration CSI reporting, through which sub-configuration CSI reporting can be activated.

In an implementation, a format of the MAC CE is shown in FIG. 9.

In the MAC CE, S0/S1/S2/S3 respectively indicate activation states (activated/deactivated) of CSI-ReportConfigs with a reporting type of Semi-PersistentOnPUCCH and CSI-ReportConfigIds in ascending order, among all ReportConfigToAddModLists. In this embodiment, each primary configuration may include at most eight sub-configurations;
B00-B07 (sub-configuration) represent sub-configurations associated with S0 (primary configuration), and respectively represent activation states (activated/deactivated) of sub-configurations in ascending order of their sub-configuration Ids;
B10-B17 (sub-configuration) represent sub-configurations associated with S1 (primary configuration), and respectively represent activation states (activated/deactivated) of sub-configurations in ascending order of their sub-configuration Ids;
B20-B27 (sub-configuration) represent sub-configurations associated with S2 (primary configuration), and respectively represent activation states (activated/deactivated) of sub-configurations in ascending order of their sub-configuration Ids; and
B30-B37 (sub-configuration) represent sub-configurations associated with S3 (primary configuration), and respectively represent activation states (activated/deactivated) of sub-configurations in ascending order of their sub-configuration Ids.

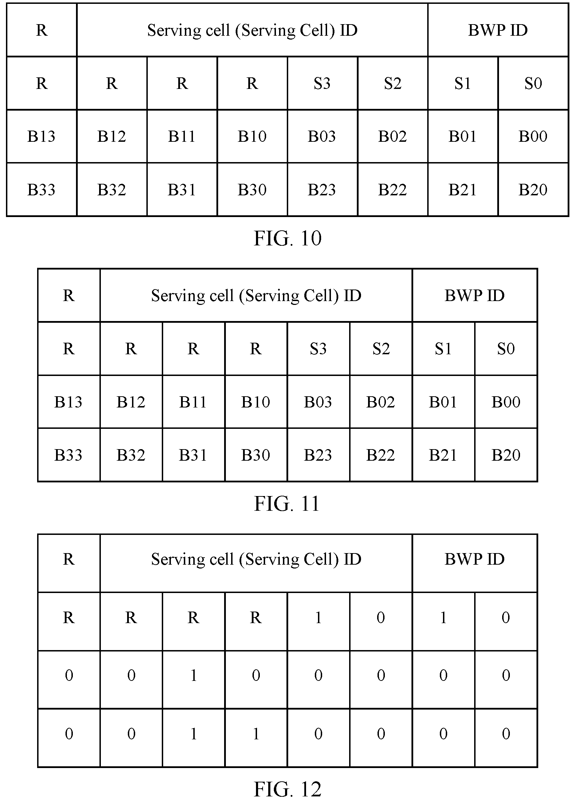

In an implementation, a format of the MAC CE is shown in FIG. 10.

In the MAC CE, S0/S1/S2/S3 respectively indicate activation states (activated/deactivated) of CSI-ReportConfigs with a reporting type of Semi-PersistentOnPUCCH and CSI-ReportConfigIds in ascending order, among all ReportConfigToAddModLists. In this embodiment, each primary configuration may include at most four sub-configurations;
B00-B03 (sub-configuration) represent sub-configurations associated with S0 (primary configuration), and respectively represent activation states (activated/deactivated) of sub-configurations in ascending order of their sub-configuration Ids;
B10-B13 (sub-configuration) represent sub-configurations associated with S1 (primary configuration), and respectively represent activation states (activated/deactivated) of sub-configurations in ascending order of their sub-configuration Ids;
B20-B23 (sub-configuration) represent sub-configurations associated with S2 (primary configuration), and respectively represent activation states (activated/deactivated) of sub-configurations in ascending order of their sub-configuration Ids; and
B30-B33 (sub-configuration) represent sub-configurations associated with S3 (primary configuration), and respectively represent activation states (activated/deactivated) of sub-configurations in ascending order of their sub-configuration Ids.

It should be noted that in the two MAC CEs shown in FIG. 9 and FIG. 10, the number of sub-configurations included in each primary configuration is fixed. In the first MAC CE, each primary configuration includes eight sub-configurations, and each row represents activation states of eight sub-configurations respectively. In the second MAC CE, each primary configuration includes four sub-configurations, and activation states (activated/deactivated) of sub-configurations are arranged in a right-to-left and top-to-bottom order, following the descending orders of primary configuration Ids and sub-configuration Ids.

### Embodiment 4:

The relationships between a primary configuration CSI report config and its sub-configuration sub-config CSI reports may be classified into the following cases (taking a semi-persistent primary configuration and sub-configuration as an example, and the same logic applies to aperiodic primary configurations and their sub-configurations, which is not repeated herein):
A CSI reporting configuration (that is, CSI report config) does not include any sub-configuration (that is, sub-config CSI report), that is, it is the same as a traditional CSI framework in the related art, specifically, if it is activation and deactivation of a CSI reporting configuration, it is still based on whether the MAC CE indicates activation of the CSI reporting configuration.
A CSI reporting configuration includes a plurality of sub-configurations, and the CSI reporting configuration is referred to as a primary configuration, and the plurality of sub-configurations included correspond to a plurality of spatial adaptation patterns. In this case, relationships between the primary configuration and the sub-configurations may also be classified into the following:
   once the CSI reporting configuration is activated, CSI for the primary configuration is reported by default; whether the CSI for the included sub-configurations is activated depends on an indication of the MAC CE; and
   after the CSI reporting configuration is activated, the primary configuration may be implicitly treated as sub-config0, and whether CSI reporting of the primary configuration (sub-config0) is activated depends on an indication of the MAC CE.

Assuming that one CSI reporting configuration includes three CSI reporting sub-configurations, the architecture of the MAC CE for indicating to activate the CSI reporting configuration and CSI reporting sub-configurations is shown in FIG. 11, where each CSI reporting configuration supports up to four sub-configurations, and by default, as long as the CSI reporting configuration is activated, the CSI for the primary configuration is definitely reported. For example, an actually transmitted MAC CE is shown in FIG. 12. Then, the UE interprets the MAC CE as triggering two CSI report configs with the second smallest and fourth smallest reportConfigIds in CSI report configs associated with the BWP, which are named as CSI report configA and CSI report configB for ease of description, and CSI for the two primary configurations is reported. The CSI of the sub-configuration with the second smallest sub-configuration Id in CSI report configA is activated, and the CSI of sub-configurations with the smallest and second smallest sub-configuration Ids in CSI report configB is also activated.

The embodiments of this application design L1/L2 signaling for triggering a plurality of sub-configuration CSI reports affiliated with the same CSI reporting configuration; the embodiments of this application provide a framework of CSI reporting sub-configuration during PD+SD joint configuration; and the embodiments of this application specify guidelines for the UE to interpret sub-configuration parameters when faced different combinations of CSI reporting sub-configurations.

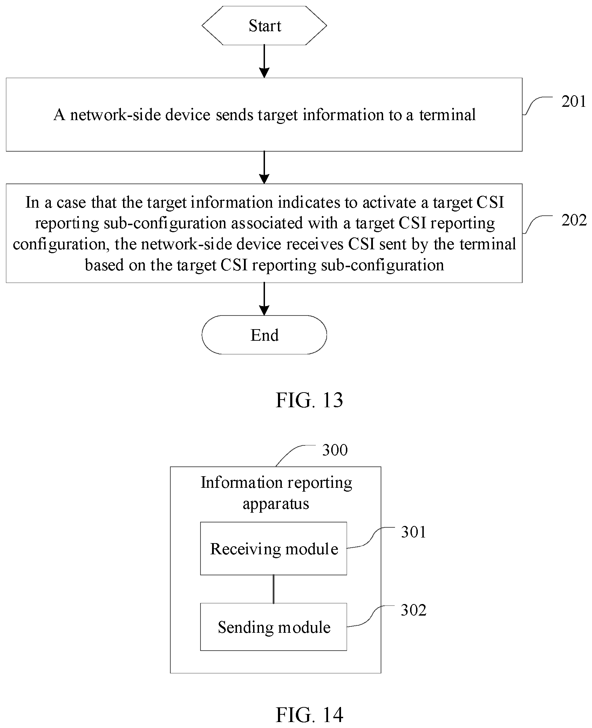

Referring to FIG. 13, FIG. 13 is a flowchart of an information reporting method according to an embodiment of this application. As shown in FIG. 13, the information reporting method includes the following steps:
Step 201: A network-side device sends target information to a terminal, where the target information is used to indicate whether to activate a target CSI reporting sub-configuration associated with a target CSI reporting configuration.
Step 202: In a case that the target information indicates to activate the target CSI reporting sub-configuration associated with the target CSI reporting configuration, the network-side device receives CSI sent by the terminal based on the target CSI reporting sub-configuration.

It should be noted that this embodiment is an implementation of a network-side device corresponding to the embodiment shown in FIG. 6. For the specific implementation, reference may be made to the related description of the embodiment shown in FIG. 6. To avoid repeated descriptions, details are not repeated in this embodiment.

The information reporting method provided in the embodiments of this application may be executed by an information reporting apparatus. In the embodiments of this application, the information reporting apparatus provided herein is described by taking the scenario where the information reporting apparatus executes the information reporting method as an example.

Referring to FIG. 14, FIG. 14 is a structural diagram of an information reporting apparatus according to an embodiment of this application, where a terminal includes the information reporting apparatus. As shown in FIG. 14, the information reporting apparatus 300 includes:
a receiving module 301, configured to receive target information sent by a network-side device, where the target information is used to indicate whether to activate a target channel state information CSI reporting sub-configuration associated with a target CSI reporting configuration; and
a sending module 302, configured to, in a case that the target information indicates to activate the target CSI reporting sub-configuration associated with the target CSI reporting configuration, send CSI to the network-side device based on the target CSI reporting sub-configuration.

Optionally, the target information is a media access control MAC control element CE or downlink control information DCI.

Optionally, in a case that the target information is a MAC CE, the target information indicates at least one of the following: whether to activate a semi-persistent target CSI reporting configuration; and whether to activate a semi-persistent target CSI reporting sub-configuration;
or
in a case that the target information is DCI, the target information indicates at least one of the following: whether to activate a semi-persistent target CSI reporting configuration; and whether to activate a semi-persistent target CSI reporting sub-configuration;
   or
in a case that the target information is DCI, the target information indicates at least one of the following: whether to activate an aperiodic target CSI reporting configuration; and whether to activate an aperiodic target CSI reporting sub-configuration.

Optionally, the target information is a first MAC CE; and
the first MAC CE includes status indication information of a plurality of CSI reporting configurations and status indication information of a plurality of CSI reporting sub-configurations associated with each of the plurality of CSI reporting configurations, and the plurality of CSI reporting configurations include the target CSI reporting configuration.

Optionally, the target information is a second MAC CE; and
the second MAC CE includes status indication information of a plurality of CSI reporting sub-configurations associated with each of a plurality of CSI reporting configurations, and the plurality of CSI reporting configurations include the target CSI reporting configuration.

Optionally, the target information is a third MAC CE, and the third MAC CE includes status indication information of CSI reporting sub-configurations associated with all activated CSI reporting configurations on a BWP to which the third MAC CE is applied.

Optionally, the DCI is used to activate a trigger state triggerState, and the triggerState is configured by RRC.

Optionally, in a case that the triggerState is used for aperiodic CSI reporting, the triggerState includes a plurality of CSI-associated reporting configuration information CSI-AssociatedReportConfigInfos, and each CSI-AssociatedReportConfigInfo includes: a to-be-activated target CSI reporting configuration identifier, a to-be-measured CSI-RS resource, and sub-configuration state information;
or
in a case that the triggerState is used for semi-persistent CSI reporting, the triggerState includes one CSI-AssociatedReportConfigInfo, and the CSI-AssociatedReportConfigInfo includes: a to-be-activated target CSI reporting configuration identifier, a to-be-measured CSI-RS resource, and sub-configuration state information; where
the sub-configuration state information includes: an identifier list of to-be-activated CSI reporting sub-configurations or a bitmap bitmap of activation states of all CSI reporting sub-configurations associated with a target CSI reporting configuration.

Optionally, the target CSI reporting sub-configuration includes at least one of the following:
an identifier of the target CSI reporting sub-configuration;
first spatial domain information;
second spatial domain information; and
power domain information; where
the first spatial domain information includes: a port subset indication; a rank restriction; and a codebook subset restriction; and
the second spatial domain information includes at least one non-zero power CSI reference signal CSI-RS resource.

Optionally, in a case that the target CSI reporting sub-configuration includes the first spatial domain information and does not include the second spatial domain information, the sending module is specifically configured to: determine, based on the first spatial domain information, a parameter required for calculating CSI corresponding to the target CSI reporting sub-configuration, and send the CSI corresponding to the target CSI reporting sub-configuration to the network-side device; or
in a case that the target CSI reporting sub-configuration includes the second spatial domain information and does not include the first spatial domain information, the sending module is specifically configured to: determine, based on the second spatial domain information, a CSI-RS measurement resource associated with the target CSI reporting sub-configuration, and send the CSI corresponding to the target CSI reporting sub-configuration to the network-side device; or
in a case that the target CSI reporting sub-configuration includes the first spatial domain information and the second spatial domain information, the sending module is specifically configured to: determine, based on the second spatial domain information, a CSI-RS measurement resource associated with the target CSI reporting sub-configuration, and send the CSI corresponding to the target CSI reporting sub-configuration to the network-side device; or
in a case that the target CSI reporting sub-configuration includes the power domain information, the sending module is specifically configured to: determine, based on the power domain information, a parameter required for calculating CSI corresponding to the target CSI reporting sub-configuration, and send the CSI corresponding to the target CSI reporting sub-configuration to the network-side device.

Optionally, the target CSI reporting sub-configuration includes the power domain information, and the power domain information includes a target power control offset value or a first target power control offset value list, where the first target power control offset value list includes a plurality of target power control offset values; and
the sending module is specifically configured to:
if the target CSI reporting sub-configuration does not include the second spatial domain information, determine, based on the power domain information, power control offset values of all non-zero power CSI-RS resources included in a CSI-RS resource set for channel measurement associated with the target CSI reporting sub-configuration; and determine CSI corresponding to the target CSI reporting sub-configuration based on the power control offset values; or
if the target CSI reporting sub-configuration includes the second spatial domain information, determine, based on the power domain information, power control offset values of non-zero power CSI-RS resources included in the target CSI reporting sub-configuration; and determine CSI corresponding to the target CSI reporting sub-configuration based on the power control offset values; and
send the CSI corresponding to the target CSI reporting sub-configuration to the network-side device.

Optionally, in a case that the power domain information includes the first target power control offset value list:
if the target CSI reporting sub-configuration does not include the second spatial domain information, the number of target power control offset values in the first target power control offset value list corresponds to the number of all non-zero power CSI-RS resources included in a CSI-RS resource set for channel measurement in a target CSI reporting configuration associated with the target CSI reporting sub-configuration;
   or
if the target CSI reporting sub-configuration includes the second spatial domain information, the number of target power control offset values in the first target power control offset value list corresponds to the number of all non-zero power CSI-RS resources included in the target CSI reporting sub-configuration.

Optionally, a plurality of target power control offset values in the first target power control offset value list correspond one-to-one to all non-zero power CSI-RS resources included in a CSI-RS resource set for channel measurement in a target CSI reporting configuration associated with the target CSI reporting sub-configuration in ascending or descending order of CSI-RS resource identifiers;
or
a plurality of target power control offset values in the first target power control offset value list correspond one-to-one to all non-zero power CSI-RS resources included in the target CSI reporting sub-configuration in ascending or descending order of CSI-RS resource identifiers.

Optionally, the target CSI reporting sub-configuration includes the power domain information, and the power domain information includes a power control offset value index or a power control offset value index list; and
the sending module is specifically configured to:
determine a power control offset value from candidate power control offset values of non-zero power CSI-RS resources associated with the target CSI reporting sub-configuration based on the power control offset value index or the power control offset value index list;
determine CSI corresponding to the target CSI reporting sub-configuration based on the power control offset value; and
send the CSI corresponding to the target CSI reporting sub-configuration to the network-side device.

Optionally, there is a mapping relationship between the power control offset value index and candidate power control offset values of each non-zero power CSI-RS resource in a plurality of non-zero power CSI-RS resources associated with the target CSI reporting sub-configuration;
or
there is a one-to-one mapping relationship between a plurality of power control offset value indexes in the power control offset value index list and candidate power control offset values of a plurality of non-zero power CSI-RS resources associated with the target CSI reporting sub-configuration.

Optionally, the target CSI reporting sub-configuration includes the power domain information, and the power domain information includes a second target power control offset value list or a power control offset value offset, where the second target power control offset value list is used to characterize an offset relative to a power control offset value of each non-zero power CSI-RS resource associated with the target CSI reporting sub-configuration, and the power control offset value offset is used to characterize an offset relative to a power control offset value of each non-zero power CSI-RS resource associated with the target CSI reporting sub-configuration; and
the sending module is specifically configured to:
determine, based on the second target power control offset value list, an offset amount of a power control offset value of each non-zero power CSI-RS resource associated with the target CSI reporting sub-configuration relative to a first original value, or determine, by the terminal based on the power control offset value offset, an offset amount of a power control offset value of each non-zero power CSI-RS resource associated with the target CSI reporting sub-configuration relative to a second original value; where the first original value is a power control offset value of each non-zero power CSI-RS resource associated with a target CSI reporting configuration corresponding to the target CSI reporting sub-configuration, and the second original value is a power control offset value of each non-zero power CSI-RS resource associated with the target CSI reporting sub-configuration;
determine CSI corresponding to the target CSI reporting sub-configuration based on the determined power control offset value; and
send the CSI corresponding to the target CSI reporting sub-configuration to the network-side device.

Optionally, the sending module is specifically configured to:
in a case that a plurality of power control offset values are configured in non-zero power CSI-RS resources for channel measurement associated with the target CSI reporting configuration and the target CSI reporting sub-configuration does not exist, determine CSI corresponding to the target CSI reporting configuration based on a first power control offset value in the non-zero power CSI-RS resources; and
send the CSI corresponding to the target CSI reporting configuration to the network-side device.

Optionally, in a case that a CSI-RS resource is associated with one or more CSI reporting configurations and CSI reporting sub-configurations, the number of activated CSI-RS ports Nrofports and a counting manner of CSI-RS resources at a target time are as follows:
if the CSI-RS resource is referred N times by the one or more CSI reporting configurations and CSI reporting sub-configurations, the CSI-RS resource and the number of CSI-RS ports corresponding to the CSI-RS resource are counted N times, where N is a positive integer.

Optionally, a first symbol count and a second symbol count corresponding to the target CSI reporting configuration meet a delay requirement agreed upon in a specification; where
the first symbol count is the number of symbols spaced between a physical downlink control channel PDCCH for scheduling the target CSI reporting configuration and CSI reporting; and
the second symbol count is the number of symbols spaced between a target non-zero power CSI-RS resource and CSI reporting, and the target non-zero power CSI-RS resource is a non-zero power CSI-RS resource for channel measurement with the earliest transmission time, associated with the target CSI reporting configuration and a CSI reporting sub-configuration corresponding to the target CSI reporting configuration.

The information reporting apparatus in this embodiment of this application may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of this application.

The information reporting apparatus provided in this embodiment of this application can implement the processes implemented by the method embodiment in FIG. 6, with the same technical effects achieved. To avoid repetition, details are not described herein again.

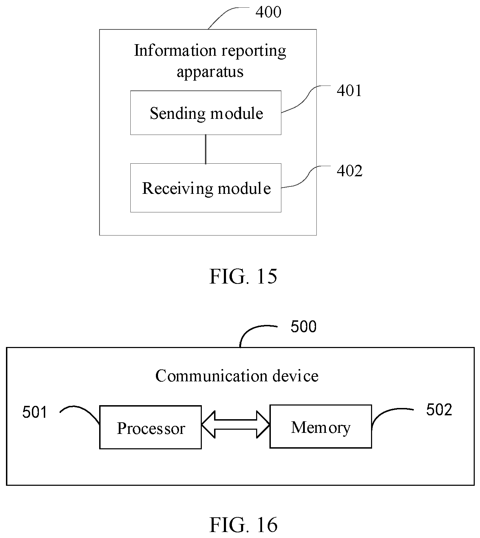

Referring to FIG. 15, FIG. 15 is a structural diagram of an information reporting apparatus according to an embodiment of this application, where a network-side device includes the information reporting apparatus. As shown in FIG. 15, the information reporting apparatus 400 includes:
a sending module 401, configured to send target information to a terminal, where the target information is used to indicate whether to activate a target CSI reporting sub-configuration associated with a target CSI reporting configuration; and
a receiving module 402, configured to, in a case that the target information indicates to activate the target CSI reporting sub-configuration associated with the target CSI reporting configuration, receive CSI sent by the terminal based on the target CSI reporting sub-configuration.

The information reporting apparatus in this embodiment of this application may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of this application.

The information reporting apparatus provided in this embodiment of this application can implement the processes implemented by the method embodiment in FIG. 13, with the same technical effects achieved. To avoid repetition, details are not described herein again.

Optionally, as shown in FIG. 16, an embodiment of this application further provides a communication device 500 including a processor 501 and a memory 502, where the memory 502 stores a program or instructions capable of running on the processor 501. For example, when the communication device 500 is a terminal, the program or instructions are executed by the processor 501 to implement the steps of the foregoing embodiment of the information reporting method applied to the terminal, with the same technical effects achieved. To avoid repetition, details are not described herein again. When the communication device 500 is a network-side device, the program or instructions are executed by the processor 501 to implement the steps of the foregoing information reporting method embodiment applied to the network-side device described above, with the same technical effects achieved. To avoid repetition, details are not described herein again.

An embodiment of this application further provides a terminal including a processor and a communication interface, where the communication interface is coupled to the processor, and the processor is configured to run a program or instructions so as to implement the steps of the method embodiment as shown in FIG. 3. This terminal embodiment corresponds to the foregoing method embodiment on the terminal side. All implementations in the foregoing method embodiment may be applicable to this terminal embodiment, with the same technical effects achieved.

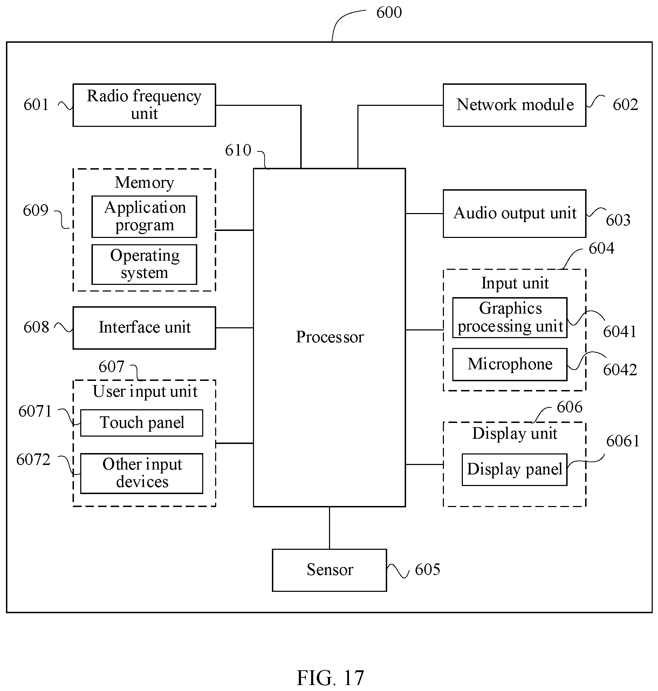

Specifically, FIG. 17 is a schematic structural diagram of hardware of a terminal for implementing embodiments of this application.

The terminal 600 includes, but is not limited to, at least some of components such as a radio frequency unit 601, a network module 602, an audio output unit 603, an input unit 604, a sensor 605, a display unit 606, a user input unit 607, an interface unit 608, a memory 609, and a processor 610.

Persons skilled in the art can understand that the terminal 600 may further include a power supply (for example, a battery) for supplying power to the components. The power supply may be logically connected to the processor 610 through a power management system. In this way, functions such as charge management, discharge management, and power consumption management are implemented by using the power management system. The structure of the terminal shown in FIG. 17 does not constitute any limitation on the terminal. The terminal may include more or fewer components than shown in the figure, or a combination of some components, or the components disposed differently. Details are not described herein again.

It should be understood that in this embodiment of this application, the input unit 604 may include a graphics processing unit (Graphics Processing Unit, GPU) 6041 and a microphone 6042. The GPU 6041 processes image data of a static picture or a video that is obtained by an image capture apparatus (for example, a camera) in a video capture mode or an image capture mode. The display unit 606 may include a display panel 6061, and the display panel 6061 may be configured in a form of a liquid crystal display, an organic light-emitting diode, and the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function key (for example, a volume control key or a power on/off key), a trackball, a mouse, a joystick, and the like. Details are not described herein.

In this embodiment of this application, after receiving downlink data from a network-side device, the radio frequency unit 601 may transmit the downlink data to the processor 610 for processing. In addition, the radio frequency unit 601 may transmit uplink data to the network-side device. Generally, the radio frequency unit 601 includes but is not limited to an antenna, an amplifier, a transceiver, a coupler, a low noise amplifier, and a duplexer.

The memory 609 may be configured to store software programs or instructions and various data. The memory 609 may include first storage area for storing programs or instructions and a second storage area for storing data. The first storage area may store an operating system, an application program or instruction required by at least one function (for example, a sound playback function or an image playback function), and the like. In addition, the memory 609 may include either a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in this embodiment of this application includes but is not limited to these and any other suitable types of memories.

The processor 610 may include one or more processing units. Optionally, an application processor and a modem processor are integrated in the processor 610. The application processor primarily processes operations relating to an operating system, user interfaces, application programs, and the like. The modem processor primarily processes radio communication signals, for example, being a baseband processor. It can be understood that the modem processor may alternatively be not integrated in the processor 610.

The radio frequency unit 601 is configured to:
receive target information sent by a network-side device, where the target information is used to indicate whether to activate a target channel state information CSI reporting sub-configuration associated with a target CSI reporting configuration; and
in a case that the target information indicates to activate the target CSI reporting sub-configuration associated with the target CSI reporting configuration, send CSI to the network-side device based on the target CSI reporting sub-configuration.

Optionally, the target information is a media access control MAC control element CE or downlink control information DCI.

Optionally, in a case that the target information is a MAC CE, the target information indicates at least one of the following: whether to activate a semi-persistent target CSI reporting configuration; and whether to activate a semi-persistent target CSI reporting sub-configuration;
or
in a case that the target information is DCI, the target information indicates at least one of the following: whether to activate a semi-persistent target CSI reporting configuration; and whether to activate a semi-persistent target CSI reporting sub-configuration;
   or
in a case that the target information is DCI, the target information indicates at least one of the following: whether to activate an aperiodic target CSI reporting configuration; and whether to activate an aperiodic target CSI reporting sub-configuration.

Optionally, the target information is a first MAC CE; and
the first MAC CE includes status indication information of a plurality of CSI reporting configurations and status indication information of a plurality of CSI reporting sub-configurations associated with each of the plurality of CSI reporting configurations, and the plurality of CSI reporting configurations include the target CSI reporting configuration.

Optionally, the target information is a second MAC CE; and
the second MAC CE includes status indication information of a plurality of CSI reporting sub-configurations associated with each of a plurality of CSI reporting configurations, and the plurality of CSI reporting configurations include the target CSI reporting configuration.

Optionally, the target information is a third MAC CE, and the third MAC CE includes status indication information of CSI reporting sub-configurations associated with all activated CSI reporting configurations on a BWP to which the third MAC CE is applied.

Optionally, the DCI is used to activate a trigger state triggerState, and the triggerState is configured by RRC.

Optionally, in a case that the triggerState is used for aperiodic CSI reporting, the triggerState includes a plurality of CSI-associated reporting configuration information CSI-AssociatedReportConfigInfos, and each CSI-AssociatedReportConfigInfo includes: a to-be-activated target CSI reporting configuration identifier, a to-be-measured CSI-RS resource, and sub-configuration state information;
or
in a case that the triggerState is used for semi-persistent CSI reporting, the triggerState includes one CSI-AssociatedReportConfigInfo, and the CSI-AssociatedReportConfigInfo includes: a to-be-activated target CSI reporting configuration identifier, a to-be-measured CSI-RS resource, and sub-configuration state information; where
the sub-configuration state information includes: an identifier list of to-be-activated CSI reporting sub-configurations or a bitmap bitmap of activation states of all CSI reporting sub-configurations associated with a target CSI reporting configuration.

Optionally, the target CSI reporting sub-configuration includes at least one of the following:
an identifier of the target CSI reporting sub-configuration;
first spatial domain information;
second spatial domain information; and
power domain information; where
the first spatial domain information includes: a port subset indication; a rank restriction; and a codebook subset restriction; and
the second spatial domain information includes at least one non-zero power CSI reference signal CSI-RS resource.

Optionally, in a case that the target CSI reporting sub-configuration includes the first spatial domain information and does not include the second spatial domain information, the radio frequency unit 601 is specifically configured to: determine, based on the first spatial domain information, a parameter required for calculating CSI corresponding to the target CSI reporting sub-configuration, and send the CSI corresponding to the target CSI reporting sub-configuration to the network-side device; or
in a case that the target CSI reporting sub-configuration includes the second spatial domain information and does not include the first spatial domain information, the radio frequency unit 601 is specifically configured to: determine, based on the second spatial domain information, a CSI-RS measurement resource associated with the target CSI reporting sub-configuration, and send CSI corresponding to the target CSI reporting sub-configuration to the network-side device; or
in a case that the target CSI reporting sub-configuration includes the first spatial domain information and the second spatial domain information, the radio frequency unit 601 is specifically configured to: determine, based on the second spatial domain information, a CSI-RS measurement resource associated with the target CSI reporting sub-configuration, and send CSI corresponding to the target CSI reporting sub-configuration to the network-side device; or
in a case that the target CSI reporting sub-configuration includes the power domain information, the radio frequency unit 601 is specifically configured to: determine, based on the power domain information, a parameter required for calculating CSI corresponding to the target CSI reporting sub-configuration, and send CSI corresponding to the target CSI reporting sub-configuration to the network-side device.

Optionally, the target CSI reporting sub-configuration includes the power domain information, and the power domain information includes: a target power control offset value or a first target power control offset value list, where the first target power control offset value list includes a plurality of target power control offset values; and
the radio frequency unit 601 is specifically configured to:
if the target CSI reporting sub-configuration does not include the second spatial domain information, determine, based on the power domain information, power control offset values of all non-zero power CSI-RS resources included in a CSI-RS resource set for channel measurement associated with the target CSI reporting sub-configuration; and determine CSI corresponding to the target CSI reporting sub-configuration based on the power control offset values; or
if the target CSI reporting sub-configuration includes the second spatial domain information, determine, based on the power domain information, power control offset values of non-zero power CSI-RS resources included in the target CSI reporting sub-configuration; and determine CSI corresponding to the target CSI reporting sub-configuration based on the power control offset values; and
send the CSI corresponding to the target CSI reporting sub-configuration to the network-side device.

Optionally, in a case that the power domain information includes the first target power control offset value list:
if the target CSI reporting sub-configuration does not include the second spatial domain information, the number of target power control offset values in the first target power control offset value list corresponds to the number of all non-zero power CSI-RS resources included in a CSI-RS resource set for channel measurement in a target CSI reporting configuration associated with the target CSI reporting sub-configuration;
   or
if the target CSI reporting sub-configuration includes the second spatial domain information, the number of target power control offset values in the first target power control offset value list corresponds to the number of all non-zero power CSI-RS resources included in the target CSI reporting sub-configuration.

Optionally, a plurality of target power control offset values in the first target power control offset value list correspond one-to-one to all non-zero power CSI-RS resources included in a CSI-RS resource set for channel measurement in a target CSI reporting configuration associated with the target CSI reporting sub-configuration in ascending or descending order of CSI-RS resource identifiers;
or
a plurality of target power control offset values in the first target power control offset value list correspond one-to-one to all non-zero power CSI-RS resources included in the target CSI reporting sub-configuration in ascending or descending order of CSI-RS resource identifiers.

Optionally, the target CSI reporting sub-configuration includes the power domain information, and the power domain information includes a power control offset value index or a power control offset value index list; and
the radio frequency unit 601 is specifically configured to:
determine a power control offset value from candidate power control offset values of non-zero power CSI-RS resources associated with the target CSI reporting sub-configuration based on the power control offset value index or the power control offset value index list;
determine CSI corresponding to the target CSI reporting sub-configuration based on the power control offset value; and
send the CSI corresponding to the target CSI reporting sub-configuration to the network-side device.

Optionally, there is a mapping relationship between the power control offset value index and candidate power control offset values of each non-zero power CSI-RS resource in a plurality of non-zero power CSI-RS resources associated with the target CSI reporting sub-configuration;
or
there is a one-to-one mapping relationship between a plurality of power control offset value indexes in the power control offset value index list and candidate power control offset values of a plurality of non-zero power CSI-RS resources associated with the target CSI reporting sub-configuration.

Optionally, the target CSI reporting sub-configuration includes the power domain information, and the power domain information includes a second target power control offset value list or a power control offset value offset, where the second target power control offset value list is used to characterize an offset relative to a power control offset value of each non-zero power CSI-RS resource associated with the target CSI reporting sub-configuration, and the power control offset value offset is used to characterize an offset relative to a power control offset value of each non-zero power CSI-RS resource associated with the target CSI reporting sub-configuration; and
the radio frequency unit 601 is specifically configured to:
determine, based on the second target power control offset value list, an offset amount of a power control offset value of each non-zero power CSI-RS resource associated with the target CSI reporting sub-configuration relative to a first original value, or determine, based on the power control offset value offset, an offset amount of a power control offset value of each non-zero power CSI-RS resource associated with the target CSI reporting sub-configuration relative to a second original value; where the first original value is a power control offset value of each non-zero power CSI-RS resource associated with a target CSI reporting configuration corresponding to the target CSI reporting sub-configuration, and the second original value is a power control offset value of each non-zero power CSI-RS resource associated with the target CSI reporting sub-configuration;
determine CSI corresponding to the target CSI reporting sub-configuration based on the determined power control offset value; and
send the CSI corresponding to the target CSI reporting sub-configuration to the network-side device.

Optionally, the radio frequency unit 601 is specifically configured to:
in a case that a plurality of power control offset values are configured in non-zero power CSI-RS resources for channel measurement associated with the target CSI reporting configuration and the target CSI reporting sub-configuration does not exist, determine CSI corresponding to the target CSI reporting configuration based on a first power control offset value in the non-zero power CSI-RS resources; and
send the CSI corresponding to the target CSI reporting configuration to the network-side device.

Optionally, in a case that a CSI-RS resource is associated with one or more CSI reporting configurations and CSI reporting sub-configurations, the number of activated CSI-RS ports Nrofports and a counting manner of CSI-RS resources at a target time are as follows:
if the CSI-RS resource is referred N times by the one or more CSI reporting configurations and CSI reporting sub-configurations, the CSI-RS resource and the number of CSI-RS ports corresponding to the CSI-RS resource are counted N times, where N is a positive integer.

Optionally, a first symbol count and a second symbol count corresponding to the target CSI reporting configuration meet a delay requirement agreed upon in a specification; where
the first symbol count is the number of symbols spaced between a physical downlink control channel PDCCH for scheduling the target CSI reporting configuration and CSI reporting; and
the second symbol count is the number of symbols spaced between a target non-zero power CSI-RS resource and CSI reporting, and the target non-zero power CSI-RS resource is a non-zero power CSI-RS resource for channel measurement with the earliest transmission time, associated with the target CSI reporting configuration and a CSI reporting sub-configuration corresponding to the target CSI reporting configuration.

It can be understood that implementation processes of the foregoing implementations may refer to related descriptions in the method embodiment of FIG. 6, and same or corresponding technical effects can be achieved. To avoid repetition, details are not described herein again.

Specifically, the terminal in this embodiment of this application further includes: instructions or a program stored in the memory 609 and capable of running on the processor 610. The processor 610 invokes the instructions or program in the memory 609 to execute the method executed by the modules shown in FIG. 14, with the same technical effects achieved. To avoid repetition, details are not described herein again.

An embodiment of this application further provides a network-side device, including a processor and a communication interface, where the communication interface is coupled to the processor, and the processor is configured to run a program or instructions so as to implement the steps of the method embodiment as shown in FIG. 13. The network-side device embodiment corresponds to the foregoing method embodiment. All implementations in the foregoing method embodiment may be applicable to the network-side device embodiment, with the same technical effect achieved.

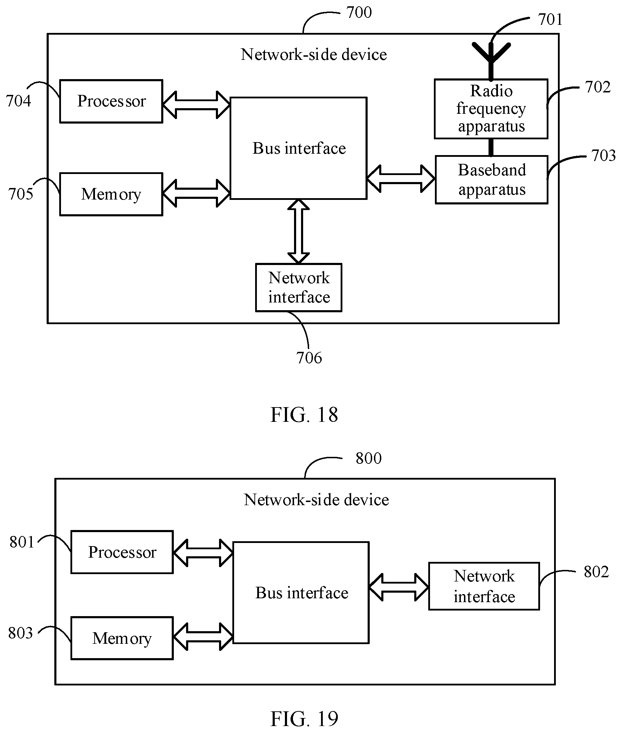

Specifically, an embodiment of this application further provides a network-side device. The network-side device may be a first node, a second node, or a data providing node. As shown in FIG. 18, the network-side device 700 includes: an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701, and sends the received information to the baseband apparatus 703 for processing. In a downlink direction, the baseband apparatus 703 processes to-be-sent information, and sends the information to the radio frequency apparatus 702; and the radio frequency apparatus 702 processes the received information and then sends the information using the antenna 701.

The method performed by the network-side device in the foregoing embodiment may be implemented in the baseband apparatus 703, and the baseband apparatus 703 includes a baseband processor.

The baseband apparatus 703 may include, for example, at least one baseband board, where a plurality of chips are disposed on the baseband board. As shown in FIG. 18, one of the chips is, for example, the baseband processor, and connected to the memory 705 through a bus interface, to invoke the program in the memory 705 to perform the operations of the network device shown in the foregoing method embodiment.

The network-side device may further include a network interface 706, where the interface is, for example, a common public radio interface (Common Public Radio Interface, CPRI).

Specifically, the network-side device 700 in this embodiment of this application further includes: instructions or a program stored in the memory 705 and capable of running on the processor 704. The processor 704 invokes the instructions or program in the memory 705 to execute the method executed by the modules shown in FIG. 15, with the same technical effects achieved. To avoid repetition, details are not described herein again.

Specifically, an embodiment of this application further provides a network-side device. As shown in FIG. 19, the network-side device 800 includes a processor 801, a network interface 802, a memory 803. The network interface 802 may be, for example, a common public radio interface (common public radio interface, CPRI).

Specifically, the network-side device 800 in this embodiment of this application further includes: instructions or a program stored in the memory 803 and capable of running on the processor 801. The processor 801 invokes the instructions or program in the memory 803 to execute the method executed by the modules shown in FIG. 15, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing information reporting method embodiment are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface, the communication interface is coupled to the processor, and the processor is configured to run a program or instructions to implement the processes of the foregoing information reporting method embodiment, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing information reporting method embodiments, with the same technical effects achieved. To avoid repetition, the details are not repeated herein.

An embodiment of this application further provides an information reporting system, including a terminal and a network-side device, where the terminal may be configured to execute the steps of the foregoing information reporting method applied to the terminal, and the network-side device may be configured to execute the steps of the information reporting method applied to the network-side device.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. This computer software product is stored in a storage medium (such as ROM, RAM, magnetic disk, or optical disk) and includes a number of instructions to enable the terminal or the network-side device to execute the methods described in the various embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may further devise many forms of embodiments without departing from principles of this application and the protection scope of the claims, and all these embodiments fall within the protection scope of this application.

## Claims

1. An information reporting method, comprising:
receiving, by a terminal, target information sent by a network-side device, wherein the target information is used to indicate whether to activate a target channel state information CSI reporting sub-configuration associated with a target CSI reporting configuration; and
in a case that the target information indicates to activate the target CSI reporting sub-configuration associated with the target CSI reporting configuration, sending, by the terminal, CSI to the network-side device based on the target CSI reporting sub-configuration.

2. The method according to claim 1, wherein the target information is a media access control MAC control element CE or downlink control information DCI.

3. The method according to claim 1 or 2, wherein in a case that the target information is a MAC CE, the target information indicates at least one of the following: whether to activate a semi-persistent target CSI reporting configuration; and whether to activate a semi-persistent target CSI reporting sub-configuration;
or
in a case that the target information is DCI, the target information indicates at least one of the following: whether to activate a semi-persistent target CSI reporting configuration; and whether to activate a semi-persistent target CSI reporting sub-configuration;
or
in a case that the target information is DCI, the target information indicates at least one of the following: whether to activate an aperiodic target CSI reporting configuration; and whether to activate an aperiodic target CSI reporting sub-configuration.

4. The method according to any one of claims 1 to 3, wherein the target information is a first MAC CE; and
the first MAC CE comprises status indication information of a plurality of CSI reporting configurations and status indication information of a plurality of CSI reporting sub-configurations associated with each of the plurality of CSI reporting configurations, and the plurality of CSI reporting configurations comprise the target CSI reporting configuration.

5. The method according to any one of claims 1 to 3, wherein the target information is a second MAC CE; and
the second MAC CE comprises status indication information of a plurality of CSI reporting sub-configurations associated with each of a plurality of CSI reporting configurations, and the plurality of CSI reporting configurations comprise the target CSI reporting configuration.

6. The method according to any one of claims 1 to 3, wherein the target information is a third MAC CE; and the third MAC CE comprises status indication information of CSI reporting sub-configurations associated with all activated CSI reporting configurations on a BWP to which the third MAC CE is applied.

7. The method according to claim 2 or 3, wherein the DCI is used to activate a trigger state triggerState, and the triggerState is configured by RRC.

8. The method according to claim 7, wherein in a case that the triggerState is used for aperiodic CSI reporting, the triggerState comprises a plurality of CSI-associated reporting configuration information CSI-AssociatedReportConfigInfos, and each CSI-AssociatedReportConfigInfo comprises: a to-be-activated target CSI reporting configuration identifier, a to-be-measured CSI-RS resource, and sub-configuration state information;
or
in a case that the triggerState is used for semi-persistent CSI reporting, the triggerState comprises one CSI-AssociatedReportConfigInfo, and the CSI-AssociatedReportConfigInfo comprises: a to-be-activated target CSI reporting configuration identifier, a to-be-measured CSI-RS resource, and sub-configuration state information; wherein
the sub-configuration state information comprises: an identifier list of to-be-activated CSI reporting sub-configurations or a bitmap of activation states of all CSI reporting sub-configurations associated with a target CSI reporting configuration.

9. The method according to any one of claims 1 to 8, wherein the target CSI reporting sub-configuration comprises at least one of the following:
an identifier of the target CSI reporting sub-configuration;
first spatial domain information;
second spatial domain information; and
power domain information; wherein
the first spatial domain information comprises: a port subset indication; a rank restriction; and a codebook subset restriction; and
the second spatial domain information comprises at least one non-zero power CSI reference signal CSI-RS resource.

10. The method according to claim 9, wherein in a case that the target CSI reporting sub-configuration comprises the first spatial domain information and does not comprise the second spatial domain information, the sending, by the terminal, CSI to the network-side device based on the target CSI reporting sub-configuration comprises: determining, by the terminal based on the first spatial domain information, a parameter required for calculating CSI corresponding to the target CSI reporting sub-configuration, and sending the CSI corresponding to the target CSI reporting sub-configuration to the network-side device; or
in a case that the target CSI reporting sub-configuration comprises the second spatial domain information and does not comprise the first spatial domain information, the sending, by the terminal, CSI to the network-side device based on the target CSI reporting sub-configuration comprises: determining, by the terminal based on the second spatial domain information, a CSI-RS measurement resource associated with the target CSI reporting sub-configuration, and sending CSI corresponding to the target CSI reporting sub-configuration to the network-side device; or
in a case that the target CSI reporting sub-configuration comprises the first spatial domain information and the second spatial domain information, the sending, by the terminal, CSI to the network-side device based on the target CSI reporting sub-configuration comprises: determining, by the terminal based on the second spatial domain information, a CSI-RS measurement resource associated with the target CSI reporting sub-configuration, and sending CSI corresponding to the target CSI reporting sub-configuration to the network-side device; or
in a case that the target CSI reporting sub-configuration comprises the power domain information, the sending, by the terminal, CSI to the network-side device based on the target CSI reporting sub-configuration comprises: determining, by the terminal based on the power domain information, a parameter required for calculating CSI corresponding to the target CSI reporting sub-configuration, and sending CSI corresponding to the target CSI reporting sub-configuration to the network-side device.

11. The method according to claim 9 or 10, wherein the target CSI reporting sub-configuration comprises the power domain information, and the power domain information comprises: a target power control offset value or a first target power control offset value list, wherein the first target power control offset value list comprises a plurality of target power control offset values; and
the sending, by the terminal, CSI to the network-side device based on the target CSI reporting sub-configuration comprises:
if the target CSI reporting sub-configuration does not comprise the second spatial domain information, determining, by the terminal based on the power domain information, power control offset values of all non-zero power CSI-RS resources comprised in a CSI-RS resource set for channel measurement associated with the target CSI reporting sub-configuration; and determining, by the terminal, CSI corresponding to the target CSI reporting sub-configuration based on the power control offset values; or
if the target CSI reporting sub-configuration comprises the second spatial domain information, determining, by the terminal based on the power domain information, power control offset values of non-zero power CSI-RS resources comprised in the target CSI reporting sub-configuration; and determining, by the terminal, CSI corresponding to the target CSI reporting sub-configuration based on the power control offset values; and
sending, by the terminal, the CSI corresponding to the target CSI reporting sub-configuration to the network-side device.

12. The method according to claim 11, wherein in a case that the power domain information comprises the first target power control offset value list:
if the target CSI reporting sub-configuration does not comprise the second spatial domain information, the number of target power control offset values in the first target power control offset value list corresponds to the number of all non-zero power CSI-RS resources comprised in a CSI-RS resource set for channel measurement in a target CSI reporting configuration associated with the target CSI reporting sub-configuration;
or
if the target CSI reporting sub-configuration comprises the second spatial domain information, the number of target power control offset values in the first target power control offset value list corresponds to the number of all non-zero power CSI-RS resources comprised in the target CSI reporting sub-configuration.

13. The method according to claim 12, wherein a plurality of target power control offset values in the first target power control offset value list correspond one-to-one to all non-zero power CSI-RS resources comprised in a CSI-RS resource set for channel measurement in a target CSI reporting configuration associated with the target CSI reporting sub-configuration in ascending or descending order of CSI-RS resource identifiers;
or
a plurality of target power control offset values in the first target power control offset value list correspond one-to-one to all non-zero power CSI-RS resources comprised in the target CSI reporting sub-configuration in ascending or descending order of CSI-RS resource identifiers.

14. The method according to claim 9, wherein the target CSI reporting sub-configuration comprises the power domain information, and the power domain information comprises a power control offset value index or a power control offset value index list; and
the sending, by the terminal, CSI to the network-side device based on the target CSI reporting sub-configuration comprises:
determining, by the terminal, a power control offset value from candidate power control offset values of non-zero power CSI-RS resources associated with the target CSI reporting sub-configuration based on the power control offset value index or the power control offset value index list;
determining, by the terminal, CSI corresponding to the target CSI reporting sub-configuration based on the power control offset value; and
sending, by the terminal, the CSI corresponding to the target CSI reporting sub-configuration to the network-side device.

15. The method according to claim 14, wherein there is a mapping relationship between the power control offset value index and candidate power control offset values of each non-zero power CSI-RS resource in a plurality of non-zero power CSI-RS resources associated with the target CSI reporting sub-configuration;
or
there is a one-to-one mapping relationship between a plurality of power control offset value indexes in the power control offset value index list and candidate power control offset values of a plurality of non-zero power CSI-RS resources associated with the target CSI reporting sub-configuration.

16. The method according to claim 9, wherein the target CSI reporting sub-configuration comprises the power domain information, and the power domain information comprises a second target power control offset value list or a power control offset value offset, wherein the second target power control offset value list is used to characterize an offset relative to a power control offset value of each non-zero power CSI-RS resource associated with the target CSI reporting sub-configuration, and the power control offset value offset is used to characterize an offset relative to a power control offset value of each non-zero power CSI-RS resource associated with the target CSI reporting sub-configuration; and
the sending, by the terminal, CSI to the network-side device based on the target CSI reporting sub-configuration comprises:
determining, by the terminal based on the second target power control offset value list, an offset amount of a power control offset value of each non-zero power CSI-RS resource associated with the target CSI reporting sub-configuration relative to a first original value, or determining, by the terminal based on the power control offset value offset, an offset amount of a power control offset value of each non-zero power CSI-RS resource associated with the target CSI reporting sub-configuration relative to a second original value; wherein the first original value is a power control offset value of each non-zero power CSI-RS resource associated with a target CSI reporting configuration corresponding to the target CSI reporting sub-configuration, and the second original value is a power control offset value of each non-zero power CSI-RS resource associated with the target CSI reporting sub-configuration;
determining, by the terminal, CSI corresponding to the target CSI reporting sub-configuration based on the determined power control offset value; and
sending, by the terminal, the CSI corresponding to the target CSI reporting sub-configuration to the network-side device.

17. The method according to any one of claims 1 to 16, wherein the sending, by the terminal, CSI to the network-side device based on the target CSI reporting sub-configuration comprises:
in a case that a plurality of power control offset values are configured in non-zero power CSI-RS resources for channel measurement associated with the target CSI reporting configuration and the target CSI reporting sub-configuration does not exist, determining, by the terminal, CSI corresponding to the target CSI reporting configuration based on a first power control offset value in the non-zero power CSI-RS resources; and
sending, by the terminal, the CSI corresponding to the target CSI reporting configuration to the network-side device.

18. The method according to any one of claims 1 to 17, wherein in a case that a CSI-RS resource is associated with one or more CSI reporting configurations and CSI reporting sub-configurations, the number of activated CSI-RS ports Nrofports and a counting manner of CSI-RS resources at a target time are as follows:
if the CSI-RS resource is referred N times by the one or more CSI reporting configurations and CSI reporting sub-configurations, the CSI-RS resource and the number of CSI-RS ports corresponding to the CSI-RS resource are counted N times, wherein N is a positive integer.

19. The method according to any one of claims 1 to 18, wherein a first symbol count and a second symbol count corresponding to the target CSI reporting configuration meet a delay requirement agreed upon in a specification; wherein
the first symbol count is the number of symbols spaced between a physical downlink control channel PDCCH for scheduling the target CSI reporting configuration and CSI reporting; and
the second symbol count is the number of symbols spaced between a target non-zero power CSI-RS resource and CSI reporting, and the target non-zero power CSI-RS resource is a non-zero power CSI-RS resource for channel measurement with the earliest transmission time, associated with the target CSI reporting configuration and a CSI reporting sub-configuration corresponding to the target CSI reporting configuration.

20. An information reporting method, comprising:
sending, by a network-side device, target information to a terminal, wherein the target information is used to indicate whether to activate a target CSI reporting sub-configuration associated with a target CSI reporting configuration; and
in a case that the target information indicates to activate the target CSI reporting sub-configuration associated with the target CSI reporting configuration, receiving, by the network-side device, CSI sent by the terminal based on the target CSI reporting sub-configuration.

21. An information reporting apparatus, wherein a terminal comprises the information reporting apparatus, and the apparatus comprises:
a receiving module, configured to receive target information sent by a network-side device, wherein the target information is used to indicate whether to activate a target channel state information CSI reporting sub-configuration associated with a target CSI reporting configuration; and
a sending module, configured to, in a case that the target information indicates to activate the target CSI reporting sub-configuration associated with the target CSI reporting configuration, send CSI to the network-side device based on the target CSI reporting sub-configuration.

22. An information reporting apparatus, wherein a network-side device comprises the information reporting apparatus, and the apparatus comprises:
a sending module, configured to send target information to a terminal, wherein the target information is used to indicate whether to activate a target CSI reporting sub-configuration associated with a target CSI reporting configuration; and
a receiving module, configured to, in a case that the target information indicates to activate the target CSI reporting sub-configuration associated with the target CSI reporting configuration, receive CSI sent by the terminal based on the target CSI reporting sub-configuration.

23. A terminal, comprising a processor and a memory, wherein the memory stores a program or instructions capable of running on the processor, and the program or the instructions, when executed by the processor, implement the steps of the information reporting method according to any one of claims 1 to 19.

24. A network-side device, comprising a processor and a memory, wherein the memory stores a program or instructions capable of running on the processor, and the program or the instructions, when executed by the processor, implement the steps of the information reporting method according to claim 20.

25. A chip, wherein the chip comprises a processor and a communication interface, the communication interface is coupled to the processor, and the processor is configured to run a program or instructions to implement the steps of the information reporting method according to any one of claims 1 to 19, or implement the steps of the information reporting method according to claim 20.

26. A readable storage medium, wherein the readable storage medium stores a program or instructions, and the program or the instructions, when executed by a processor, implement the steps of the information reporting method according to any one of claims 1 to 19, or implement the steps of the information reporting method according to claim 20.
